# EUROPÄISCHE PATENTSCHRIFT

(11) **EP 3 247 062 B1**
(45) Veröffentlichungstag und Bekanntmachung des Hinweises auf die Patenterteilung: **09.10.2024**
(21) Anmeldenummer: 16170242.8
(22) Anmeldetag: 18.05.2016
(51) Int. Cl.: H04J 14/02

(54) **VERFAHREN ZUR EFFIZIENTEREN DATENÜBERTRAGUNG IN EINEM TELEKOMMUNIKATIONSNETZ, INSBESONDERE BERUHEND AUF OPTISCHEN DATENÜBERTRAGUNGSKOMPONENTEN ZUM WELLENLÄNGEN-MULTIPLEX-BETRIEB EINER MEHRZAHL VON VERSCHIEDENEN OPTISCHEN WELLENLÄNGEN, WOBEI DAS TELEKOMMUNIKATIONSNETZ EINE MEHRZAHL VON NETZKNOTEN UND ZWISCHEN DEN NETZKNOTEN VORLIEGENDE DATENÜBERTRAGUNGSSTRECKEN AUFWEIST, TELEKOMMUNIKATIONSNETZ, COMPUTERPROGRAMM UND COMPUTERPROGRAMMPRODUKT**
METHOD FOR IMPROVING EFFICIENCY OF DATA TRANSMISSION IN A TELECOMMUNICATIONS NETWORK, IN PARTICULAR BASED ON OPTICAL DATA TRANSMISSION COMPONENTS FOR WAVELENGTH MULTIPLEX OPERATION OF A PLURALITY OF DIFFERENT OPTICAL WAVELENGTHS, WHEREIN THE TELECOMMUNICATIONS NETWORK COMPRISES A PLURALITY OF NETWORK NODES AND DATA TRANSMISSION LINES BETWEEN THE NETWORK NODES, TELECOMMUNICATIONS NETWORK, COMPUTER PROGRAM AND A COMPUTER PROGRAM PRODUCT
PROCÉDÉ DE TRANSMISSION EFFICACE DE DONNÉES DANS UN RÉSEAU DE TÉLÉCOMMUNICATION EN PARTICULIER BASÉ SUR DES COMPOSANTS DE TRANSMISSION DE DONNÉES OPTIQUES EN MULTIPLEXAGE EN LONGUEURS D'ONDE D'UNE PLURALITÉ DE DIFFÉRENTES LONGUEURS D'ONDES OPTIQUES, LE RÉSEAU DE TÉLÉCOMMUNICATION OPTIQUE COMPRENANT UNE PLURALITÉ DE N UDS DE RÉSEAU ET DE LIGNES DE TRANSMISSION DE DONNÉES PRÉSENTES ENTRE LES N UDS DE RÉSEAU, RÉSEAU DE TÉLÉCOMMUNICATION, PROGRAMME INFORMATIQUE ET PRODUIT DE PROGRAMME INFORMATIQUE

(43) Veröffentlichungstag der Anmeldung: 22.11.2017
(73) Patentinhaber: Deutsche Telekom AG, 53113 Bonn (DE)
(72) Erfinder: GUNKEL, Matthias, 64291 Darmstadt (DE); WISSEL, Felix, 64372 Ober-Ramstadt (DE)
(74) Vertreter: Schwöbel, Thilo K.

(56) Entgegenhaltungen:
- EP-A1- 3 021 536
- WO-A1-2015/021832
- US-A1- 2011 206 371
- US-A1- 2013 202 299

## Beschreibung

### Stand der Technik

Die Erfindung betrifft ein Verfahren zur effizienteren Datenübertragung in einem Telekommunikationsnetz, insbesondere beruhend auf optischen Datenübertragungskomponenten zum Wellenlängen-Multiplex-Betrieb (WDM, wavelength division multiplex) einer Mehrzahl von verschiedenen optischen Wellenlängen, wobei das Telekommunikationsnetz eine Mehrzahl von Netzknoten und zwischen den Netzknoten vorliegende Datenübertragungsstrecken aufweist.

Die Erfindung betrifft ferner ein Telekommunikationsnetz zur effizienteren Datenübertragung in dem Telekommunikationsnetz, insbesondere beruhend auf optischen Datenübertragungskomponenten zum Wellenlängen-Multiplex-Betrieb (WDM, wavelength division multiplex) einer Mehrzahl von verschiedenen optischen Wellenlängen, wobei das Telekommunikationsnetz eine Mehrzahl von Netzknoten und zwischen den Netzknoten vorliegende Datenübertragungsstrecken aufweist.

Ferner betrifft die Erfindung auch ein Computerprogramm mit Programmcodemitteln und ein Computerprogrammprodukt mit einem computerlesbaren Medium und einem auf dem computerlesbaren Medium gespeicherten Computerprogramm, die dazu geeignet sind, alle Schritte des erfindungsgemäßen Verfahrens auszuführen.

Die US 2013/202299 A1 betrifft ein Pfadberechnungssystem für optische Netze unter Berücksichtigung von Verbindungsbeschränkungen und damit verbundenen Knotenbeschränkungen.

Bekannt und implementiert sind optische Telekommunikationsnetze, welche Netzbetreibern optische Weitverkehrsschnittstellen mit einer festen Datenraten anbieten, wobei jedoch auch optische Schnittstellen bzw. optische Übertragungstechnik bekannt sind bzw. ist, welche variable Datenraten verwenden und damit variable Datenübertragungsraten zur Verfügung stellen können. Technisch umgesetzt werden solche unterschiedlichen Datenübertragungsraten durch verschiedene Betriebsmodi, z.B. durch den Einsatz unterschiedlicher Modulationsformate (QPSK, 8QAM, 16QAM), durch Anpassen der Bandbreite eines optischen Signals (Änderung der sogenannten Baudrate) oder durch die Verteilung des Datenstroms auf mehrere gekoppelte Wellenlängen im Sinne eines sog. "sliceable bandwidth-variable transponder" (S-BVT). Eine besondere Form des ersten Ansatzes ist die sog. Hybrid Modulation (oder time division hybrid modulation, TDHM), bei der verschiedene Modulationsformen zu festen Zeitabschnitten alterniert werden. Durch geeignete Wahl der jeweiligen Zeitdauern lassen sich nahezu beliebige effektive Übertragungsraten erzeugen. Alle Varianten solcher Anpassungen in der optischen Übertragungsrate werden mit dem Begriff "FlexRate Schnittstelle" zusammengefasst.

Aufbauend auf einer physischen Schicht (physical layer/data link layer, gemäß dem OSI-Modell) - realisiert beispielsweise in Form eines optischen Telekommunikationsnetzes - wird in derzeitigen Telekommunikationsnetzen eine elektrische Paketverarbeitung vorgenommen, welche der Client-Layer der optisch bereitgestellten Übertragungskapazitäten darstellt. Der Client-Layer, die Ebene der elektrischen Paketverarbeitung (IP-Layer bzw. IP-Ebene bzw. Internet Protocol Ebene), erwartet jedoch typischerweise eine starre Datenrate im Transport. Aus Sicht der IP-Schicht wäre es sogar vorteilhaft, wenn eine optische Schnittstelle vollständig ausgeschaltet werden würde, anstatt sie mit reduzierter (aber immer noch optimaler) Kapazität weiter zu nutzen. Dies deshalb, weil auf der IP-Schicht in aller Regel IP/MPLS Mechanismen und Protokolle (Multi Protocol Label Switch Protokolle bzw. Mechanismen) in diversen Varianten eingesetzt werden. Eine Besonderheit dieser im OSI-Stack (bzw. im OSI-Modell) auf der Ebene 3 (network layer) angesiedelten Routing-Protokolle wie beispielsweise IGP oder BGP (Internal Gateway Protocol, Border Gateway Protocol) ist es, dass sie sich nur auf abstrakte Begriffe wie Knoten und Kanten abstützen, ohne den Kanten eigene Eigenschaften zuzugestehen. Das Internet Protokoll beispielsweise ist seinem Wesen nach ein Adresskonzept und es werden für die Wegesuche zwischen den Knoten Algorithmen und Protokolle wie z.B. OSPF bzw. ISIS eingesetzt (Open Shortest Path First; Inter System Inter System). Dabei ist nur entscheidend, ob es zwischen den Knoten einen Weg (d.h. eine Kante oder eine Abfolge von Kanten und Zwischenknoten) gibt oder nicht. Um einen optimalen Datenverkehr in einem Telekommunikationsnetz zu ermöglichen, wird üblicherweise Traffic Engineering eingesetzt, d.h. verschiedene Mechanismen und Methoden, um den Verkehrsfluss durch das Netz zu optimieren. Dabei wird ausgenutzt, dass es zwischen den festgelegten Quellen und Senken des Datenverkehrs (bzgl. einer gewissen Metrik) oft zueinander äquivalente Wege gibt. In solchen Situationen wird oftmals in den beteiligten Routern ein Mechanismus eingesetzt, der sich Equal Cost Multi Path (ECMP) nennt: Für alle Pakete zwischen (identischem) Sender und (identischem) Empfänger wird ein Hashwert über relevante Protokollfelder errechnet. Dazu werden die Headerfelder wie Quell- und Zieladresse (für IP) oder der TCP/UDP-Port (Transmission Control Protocol/User Datagram Protcol Port) herangezogen. Aus diesem Hashwert wird dann im nächsten Schritt mittels einer Modulo-Operation das (IP)-Ausgangsinterface für das betrachtete Paket (bzw. die betrachtete Gruppe von Datenpaketen bestimmt und damit der Weg durch das Netz festgelegt. Durch die Beachtung der Headerfelder ist sichergestellt, dass alle Pakete, die zur gleichen Gruppe gehören, d.h. insbesondere zum gleichen TCP-Flow gehören, den gleichen Weg durch das Netz nehmen. Dadurch wird Paket-Reordering, d.h. das Umsortieren von (in einer Gruppe zusammengehörenden) Paketen nach deren Empfang, vermieden. Die Verwendung des ECMP Protokolls setzt in der Regel voraus, dass die verschiedenen Wege (zwischen gleicher Quelle bzw. gleichem Quellenknoten einerseits und gleicher Senke bzw. gleichem Ziel bzw. gleichem Zielknoten andererseits) nicht nur bezüglich der Routing-Metrik exakt gleich sind (sonst gelten sie nicht als äquivalent), implizit wird in der Regel davon ausgegangen, dass die Wege sich hinsichtlich ihrer Übertragungsrate nicht maßgeblich unterscheiden dürfen. Dies ist in der Praxis nachteilig, weil dies einen enormen Optimierungsaufwand zu Folge hat, weil bei der Vergabe der Gewichte (Routing-Metriken) auf die einzelnen Kanten eine Vielzahl von Verkehrsbeziehungen und -bedarfe und sonstige Randbedingungen berücksichtigt werden müssen.

### Offenbarung der Erfindung

Der Erfindung liegt die Aufgabe zugrunde, ein Verfahren und ein Telekommunikationsnetz zur Verfügung zu stellen, bei welchem in einfacher und flexibler Weise die Möglichkeiten, die durch moderne und eine flexible Datenrate aufweisende Datentransportschnittstellen, insbesondere optische Schnittstellen bzw. flexrate Schnittstellen, zur Verfügung gestellt werden, möglichst für das Telekommunikationsnetz insgesamt, d.h. insbesondere auch für die höheren Protokollschichten - insbesondere die IP-Ebene -, in vergleichsweise einfacher und robuster Weise nutzbar zu machen, so dass bei gleicher vorgegebener Ausfallsicherheit bzw. Datenübertragungskapazität in verschiedenen Betriebsmodi (insbesondere auch umfassend Fehlersituationen) das Telekommunikationsnetz kostengünstiger realisierbar ist bzw. bei gleichen Investitionskosten für das Telekommunikationsnetz eine schnellere Wiederherstellungszeit (in einen äquivalenten Betriebsmodus) bzw. mittelbar eine höhere Ausfallsicherheit und/oder eine höhere Datenübertragungskapazität und/oder eine höhere Flexibilität hinsichtlich der Netzwerk- und Verkehrssteuerung möglich ist.

Diese Aufgabe wird erfindungsgemäß gelöst durch ein Verfahren zur effizienteren Datenübertragung in einem Telekommunikationsnetzgemäß Anspruch 1.

Es ist dadurch gemäß der vorliegenden Erfindung in vorteilhafter Weise möglich, dass auch auf der IP-Ebene eines Telekommunikationsnetzes Möglichkeiten effektiv und vorteilhaft genutzt werden können, die aufgrund einer Elastizität (d.h. Variabilität bzw. Elastizität hinsichtlich der zur Verfügung stehenden Datenübertragungsbandbreite auf verschiedenen Pfaden bzw. Datenübertragungsstrecken bzw. -kanten) auf der Ebene der physischen Datenübertragung, insbesondere - für den Fall eines optischen Telekommunikationsnetz zu Bereitstellung der physischen Datenübertragung - auf dem optischen Transport-Layer durch optische Flexrate-Schnittstellen, möglich ist.

Erfindungsgemäß wird somit ein neuartiges Lastaufteilungsverfahren auf unsymmetrische Interfacekapazitäten in einem Telekommunikationsnetz, insbesondere in Telekommunikationsnetzen, welche eine IP-Ebene bzw. IP-Schicht aufweisen und insbesondere IP/MPLS-Protokolle nutzen, vorgeschlagen, um von den Vorteilen einer (insbesondere hinsichtlich der Übertragungsbandbreite) flexiblen Übertragungstechnik (insbesondere optischen flexiblen Übertragungstechnik) tatsächlich auch für die IP-Schicht des Telekommunikationsnetzes profitieren zu können.

Die Übertragungsraten solcher Telekommunikationsnetze werden sich typischerweise im Bereich von einigen 100 Gbit/s bis 1000 Gbit/s bewegen, wobei jedoch auch größere Übertragungsraten möglich sind. Ein typischer Umschaltevorgang (etwa einer Flexrate-Schnittstelle) könnte z.B. zwischen 200 Gbit/s und 100 Gbit/s stattfinden; es sind jedoch auch feiner abgestufte Kapazitätsgranularitäten eines Interfaces bzw. einer Schnittstelle denkbar.

Typischerweise umfasst der zentrale Teil eines Telekommunikationsnetzes (auch Kernnetz bzw. Core-Netz bzw. Backbone genannt) ein MPLS-Netz, wobei am Rand eines solchen Telekommunikationsnetzes (insbesondere der zentrale Teil eines durch einen Netzbetreiber betriebenen Telekommunikationsnetzes) sogenannte Randrouter bzw. Edge-Router platziert sind, die unter Verwendung von IP Adressen (d.h. gemäß des TCP/IP-Protokolls, insbesondere unter Verwendung von Routingmechanismen von einem Knoten zum nächsten) arbeiten. Innerhalb des zentralen Teils des Telekommunikationsnetzes (d.h. innerhalb des Core Netzes) werden sogenannte Label-Switch-Router (LSR) eingesetzt. Die Randrouter bzw. Edge Router am Rand des betrachteten Telekommunikationsnetzes nennt man auch Label Edge Router (LER). An die LER sind die Kundenlokationen (des Betreibers des Telekommunikationsnetzes) und deren Endgeräte angeschlossen, die die eigentlichen Bedarfsträger der Verkehrsbedarfe darstellen. In einem solchen Telekommunikationsnetz können die Randrouter typischerweise als die Quellen und Senken der Verkehrsflüsse im Core-Netz angesehen werden. Jeder Randrouter kennt alle an ihn angebundenen möglichen Ziele und hat für diese einen Adressbereich oder mehrere Adressbereiche, den bzw. die er allen anderen Randrouter über geeignete Protokolle mitteilt.

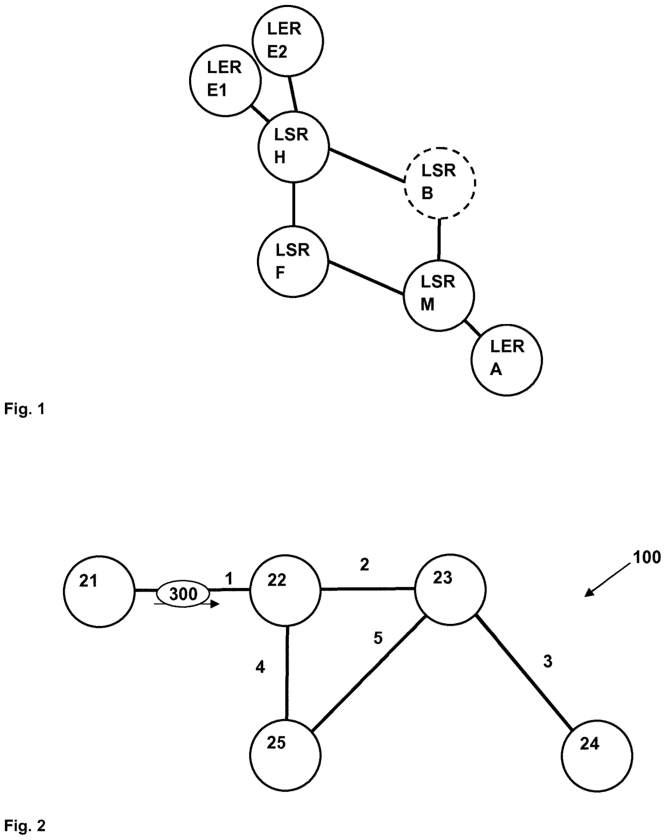

In einer beispielhaften Situation (vgl. Figur 1) soll etwa eine Anfrage von einem ersten Randrouter an einer Stelle (etwa einer Stadt) A zu einem (Ziel)Server (mit einer bekannten IP-Adresse) eines Kunden des Netzbetreibers in der Nähe einer Stelle (etwa eine Stadt) H gesandt werden: Dies bewirkt, dass der erste Randrouter (bzw. Eingangsnetzknoten bzw. Eingangs-LER) in seinen Routingtabellen mittels der Zielserver-IP-Adresse nach dem korrekten zweiten Randrouter (bzw. Ausgangsnetzknoten bzw. Ausgangs-LER) sucht. Nachdem der zweite Randrouter (Ausgangs-LER) bestimmt wurde, findet eine Abfrage in einer MPLS-Forwarding-Tabelle statt, damit ein MPLS-Label (d.h. eine Pfadinformation) bestimmt werden kann, mit dem der erste Randrouter (Eingangs-LER) das Nutzdatenpaket (beispielsweise eine IP-Abfrage) versieht (bzw. enkapsuliert) und das Nutzdatenpaket an einen weiteren Netzknoten (etwa den LSR an der Stelle M) schickt. In der MPLS-Wolke (d.h. im betrachteten Telekommunikationsnetz mit einer Mehrzahl von Netzknoten, umfassend Randrouter (LER) und Zwischennetzknoten (LSR)) kennt jeder Zwischennetzrouter (LSR) die Ziel-Label (d.h. die Pfadinformation) aller anderen Router. In jedem Hop wird das aktuelle MPLS-Label gegen das nächste ausgetauscht. Die (lokalen) Label im LSR entsprechen somit einer eindeutigen Kennung der Ausgangsschnittstellen (d.h. entweder einer der Randrouter oder aber einer der Netzknoten). In Figur 1 ist das betrachtete Telekommunikationsnetz sowohl mit den Randroutern (LER) als auch mit den Zwischennetzknoten bzw. generell Netzknoten (LSR) dargestellt. In den weiteren Figuren 2, 3 und 4 sind lediglich die Zwischennetzknoten bzw. generell die Netzknoten (LSR) dargestellt bzw. betrachtet. Erfindungsgemäß entspricht einem Nutzdatenpaket (data paket bzw. payload data paket) bzw. eine Gruppe von Nutzdatenpakten (group of data packets bzw. group (or data stream) of payload data packets) einem üblichen Datenpaket (bzw. einer Gruppe solcher Pakete) im Telekommunikationsnetz, welches als ein paketorientiertes Telekommunikationsnetz ausgebildet ist.

In herkömmlichen - insbesondere optischen bzw. auf optischer Datenübertragung beruhenden - Telekommunikationsnetzen ist es bekannt, vermaschte Topologien innerhalb des Telekommunikationsnetzes derart zu verwenden, dass zum Schutz des Netzes und zur Steigerung der Resilienz gegenüber Ausfällen das Verfahren der optischen Wiederherstellung bzw. "optical restoration" bzw. allgemeiner "optical recovery" eingesetzt wird: Im Falle eines Glasfaserbruchs werden die anfallenden Verkehrsbedarfe zunächst auf andere IP-Links umgeschaltet. Dafür muss ausreichend Ersatzkapazität vorgehalten werden. Nach der Umschaltung auf der IP-Ebene wird innerhalb der vorhandenen Glasfaserinfrastruktur für jede betroffene Wellenlänge ein neuer Lichtpfad gesucht, beleuchtet und eingepegelt. Dabei sind die neuen (optischen) Ersatzwege in der Regel länger als die ursprünglichen Lichtpfade, da der reguläre Netzbetrieb typischerweise auf die kürzesten Verbindungen hin optimiert ist. Der große Vorteil der Optical restoration/recovery ist, dass sich die IP-Topologie vor und nach dem Fehler nicht ändert und dass dieselben (vergleichsweise sehr teuren) optischen Schnittstellen wiederverwendet werden können. Ein Nachteil ist allerdings, dass sich wegen des längeren Weges die physischen Eigenschaften des optischen Pfades verschlechtern können. Das betrifft konkret das sog, optische-Signal-zu-Rausch-Verhältnis (Optical Signal to noise ratio, OSNR). Wird dieser Wert zu schlecht, kann der Empfänger das optische Signal nicht mehr hinreichend auslesen und interpretieren. Bei bisher eingesetzten Datenraten von 1 Gbit/s, 10 Gbit/s, 40 Gbit/s oder 100 Gbit/s konnte dies verkraftet werden, da in üblicherweise benutzten Telekommunikationsnetzen (etwa nationale Netze in Europa) genügend OSNR-Reserve vorhanden war; dies ist jedoch nicht mehr der Fall bei höheren Datenraten, insbesondere oberhalb von 100 Gbit/s, da in einer solchen Situation die Übertragungssysteme bzw. Empfängersysteme immer sensitiver gegenüber Änderungen des OSNR werden, bis schließlich keine Daten mehr übertragen werden können. Ferner ist es einer der grundlegenden Vorteile der Verwendung von FlexRate-Schnittstellen, dass im Normalbetrieb keine großen Systemreserven eingeplant werden müssen, weil sie die intrinsische Eigenschaft der Anpassungsfähigkeit ihrer Transportkapazität an die Qualität der Übertragungsstrecke aufweisen. Dies bedeutet, dass FlexRate-Schnittstellen besonders vorteilhaft eingesetzt werden können, wenn der OSNR-Wert beim Empfänger (bzw. der Empfängerschnittstelle) einen Schwellenwert unterschreitet, da auch in einer solchen Situation der (aufgrund einer optical restoration/recovery-Situation benutzte) neue Lichtpfad weiter betrieben werden kann, wenn auch mit einer verringerten Datenrate. Da auf der IP-Schicht bzw. IP-Ebene typischerweise davon ausgegangen wird - insbesondere bei Verwendung des ECMP-Protokolls -, dass die verschiedenen Wege (zwischen gleicher Quelle bzw. gleichem Quellenknoten einerseits und gleicher Senke bzw. gleichem Ziel bzw. gleichem Zielknoten andererseits) sich hinsichtlich ihrer Übertragungsrate nicht maßgeblich unterscheiden, ist die IP-Schicht (welche als Client-Schicht zur physischen Schicht fungiert) nicht auf diese prinzipiellen Fähigkeiten und Vorteile der (insbesondere optischen) physischen (Transport)Schicht ausgerichtet; somit ist die IP/MPLS-Schicht quasi "blind" gegenüber physischen Eigenschaften (wie insbesondere der Übertragungsbandbreite) einer physischen (Transport)Verbindung. Aufgrund der bekannten Anzahl der in einem Telekommunikationsnetz vorhandenen Randrouter (LER) lässt sich abschätzen, wie viele verschiedene Label (bzw. unterschiedliche Pfadinformationen) in Tabellen verwaltet werden müssen. In bisher üblichen Telekommunikationsnetzen wird davon ausgegangen, dass auf allen angebotenen Pfaden bzw. Links ausreichend Kapazität vorhanden ist. Damit das sichergestellt ist, ist bei herkömmlichen Telekommunikationsnetzen ein aufwendiges Monitoring der Auslastung notwendig und das sorgfältige Ausbalancieren der Gewichte der einzelnen Kanten im Load Balancing (denn das Gesamtgewicht eines Weges setzt sich aus der Summe der beteiligten Kanten zusammen). Es ist leicht einsehbar, dass dies ist ein sehr fragiles System ist, mit dem sehr behutsam umgegangen werden muss.

Gemäß der vorliegenden Erfindung wird daher vorgeschlagen, dass in für MPLS-Telekommunikationsnetze an sich bekannter Weise für eine Gruppe von (zusammengehörenden) Nutzdatenpaketen eine Pfadinformation (zur Übertragung im Telekommunikationsnetz vom ersten Randnetzknoten zum zweiten Randnetzknoten) verwendet wird, wobei die einzelnen Nutzdatenpakete der Gruppe von Nutzdatenpakete wahlweise über (wenigstens) einen ersten Übertragungspfad oder einen zweiten Übertragungspfad übertragen werden können. Die Pfadinformation wird der Gruppe von Nutzdatenpaketen durch den ersten Randnetzknoten zugewiesen (bzw. durch den ersten Randnetzknoten bestimmt) und zwar in Abhängigkeit einerseits des zweiten Randnetzknotens (d.h. des Ziels bzw. des Zielnetzknotens der Gruppe von Nutzdatenpaketen) und andererseits in Abhängigkeit einer ersten Bandbreitenverfügbarkeit des ersten Übertragungspfades und einer zweiten Bandbreitenverfügbarkeit des zweiten Übertragungspfades. Erfindungsgemäß ist es nun vorgesehen, dass nicht lediglich eine einzige Pfadinformation (in Abhängigkeit vom ersten und zweiten Randnetzknoten), sondern eine Mehrzahl von möglichen Pfadinformationen für die Datenübertragung der Gruppe von Nutzdatenpaketen vom ersten Randnetzknoten zum zweiten Randnetzknoten generiert oder aktualisiert werden bzw. existieren. Die Generierung der Mehrzahl von möglichen Pfadinformationen (MPLS-Labels) wird erfindungsgemäß bei der Konfiguration des Telekommunikationsnetzes bzw. von dessen Netzknoten vorgenommen (durch einen der beteiligten Netzknoten oder aber durch eine andere Instanz) bzw. es wird die Generierung der Mehrzahl von möglichen Pfadinformationen (MPLS-Labels) im Zuge einer Aktualisierung bzw. Änderung des Telekommunikationsnetzes (mittels insbesondere einer Aktualisierung bzw. Änderung einer Tabelle von Pfadinformationen) vorgenommen, etwa wenn ein neuer Netzknoten zum Telekommunikationsnetz hinzugefügt wird. Die erfindungsgemäß vorliegende Mehrzahl von möglichen Pfadinformationen (für das gleiche Paar von Eingangsnetzknoten und Ausgangsnetzknoten)
-- umfasst eine dem ersten Übertragungspfad zugeordnete erste Teilmenge von Pfadinformationen und eine dem zweiten Übertragungspfad zugeordnete (und von der ersten Teilmenge disjunkte) zweite Teilmenge von Pfadinformationen, oder
-- entspricht der dem ersten Übertragungspfad zugeordneten ersten Teilmenge von Pfadinformationen.
Im ersten Fall wird die Mehrzahl von möglichen Pfadinformation auf die erste Teilmenge und die zweite Teilmenge aufgeteilt (d.h. die erste und zweite Teilmenge sind disjunkt und die zweite Teilmenge entspricht nicht der leeren Menge; d.h. sowohl die erste Teilmenge als auch die zweite Teilmenge sind echte Untermengen der (Menge der) Mehrzahl von möglichen Pfadinformationen); im zweiten Fall entspricht die zweite Teilmenge der leeren Menge (und die Gesamtheit der betrachteten möglichen Pfadinformation sind der ersten Teilmenge und damit dem ersten Übertragungspfad zugeordnet; d.h. die erste Teilmenge ist keine echte Untermenge der Gesamtheit der betrachteten möglichen Pfadinformationen, sondern entspricht ihr).
Erfindungsgemäß ist nun vorgesehen, dass in einem ersten Betriebsmodus des Telekommunikationsnetzes die den Nutzdatenpaketen der betrachteten Gruppe von Nutzdatenpaketen zugeordnete Pfadinformation einer Datenübertragung über den ersten Übertragungspfad entspricht und in einem zweiten Betriebsmodus des Telekommunikationsnetzes die (gleiche) den Nutzdatenpaketen der betrachteten Gruppe von Nutzdatenpaketen zugeordnete Pfadinformation einer Datenübertragung über den zweiten Übertragungspfad entspricht (insbesondere deshalb, weil sich die erste Bandbreitenverfügbarkeit (für die Datenübertragung über den ersten Übertragungspfad im zweiten Betriebsmodus von derjenigen im ersten Betriebsmodus unterscheidet, nämlich verringert hat), d.h. ein erster Teil der Nutzdatenpakete der Gruppe von Nutzdatenpakten wird (während des Vorliegens des ersten Betriebsmodus des Telekommunikationsnetzes) über den ersten Übertragungspfad übertragen, während ein zweiter Teil der Nutzdatenpakte der Gruppe von Nutzdatenpakten wird (während des Vorliegens des zweiten Betriebsmodus des Telekommunikationsnetzes) über den zweiten Übertragungspfad übertragen. Dies korrespondiert damit, dass die der betrachteten Gruppe von Nutzdatenpaketen zugeordnete Pfadinformation nach dem Übergang vom ersten Betriebsmodus in den zweiten Betriebsmodus nicht mehr der ersten Teilmenge von Pfadinformationen, sondern der zweiten Teilmenge von Pfadinformationen zugeordnet ist. Diese Änderung der Zuordnung zur ersten bzw. zweiten Teilmenge von Pfadinformationen findet bei einer Änderung des Betriebsmodus des Telekommunikationsnetzes jeweils im ersten Schritt statt (falls sich die Änderung des Betriebsmodus auf die betrachtete Mehrzahl von Pfadinformation auswirkt). Im zweiten Schritt wird sodann (insbesondere für den Fall, dass einer (neuen) Gruppe von Nutzdatenpaketen (etwa aufgrund einer neu gestarteten Kommunikationsdienstanfrage eines Nutzers des Telekommunikationsnetzes) eine Pfadinformation zugeordnet werden muss bzw. für diese (neue) Gruppe von Nutzdatenpakten eine (bzw. "ihre") Pfadinformation bestimmt werden muss) eine Pfadinformation zur Übertragung der (neuen) Gruppe von Nutzdatenpaketen - aus der Mehrzahl von möglichen Pfadinformationen - bestimmt, wobei die (gleiche dieser (neuen) Gruppe von Nutzdatenpaketen zugeordnete) Pfadinformation im ersten Betriebsmodus Element der dem ersten Übertragungspfad zugeordneten ersten Teilmenge der Mehrzahl von Pfadinformationen und im zweiten Betriebsmodus (nach der Generierung oder Aktualisierung - im beim Übergang auf den zweiten Betriebsmodus durchgeführten ersten Schritt - der Zuordnung der betrachteten Mehrzahl von möglichen Pfadinformationen zur ersten bzw. zweiten Teilmenge von Pfadinformationen) Element der dem zweiten Übertragungspfad zugeordneten zweiten Teilmenge der Mehrzahl von Pfadinformationen ist.

Hierdurch ist es erfindungsgemäß in vorteilhafter Weise möglich, dass - nach einem Übergang (bzw. während oder im Zuge des Übergangs) vom ersten zum zweiten Betriebsmodus - durch eine einfache Änderung der Zuordnung der (der jeweiligen Gruppe von Nutzdatenpakten zugeordneten) Pfadinformation zur ersten bzw. zweiten Teilmenge von Pfadinformationen auf eine Änderung der ersten bzw. zweiten Bandbreitenverfügbarkeit reagiert werden kann und somit in einfacher und flexibler Weise eine Anpassung der Verteilung der Verkehrsströme realisierbar ist, insbesondere ohne die Notwendigkeit einer aufwändigen und gegebenenfalls riskanten Änderung von Konfigurationsparametern des Telekommunikationsnetzes auf einer vergleichsweise niedrigen (bzw. die physischen Leitungsparameter der Übertragungsstrecke betreffenden) Ebene, etwa zur Änderung von Parametern der verwendeten Routingmetriken.

Wie bereits ausgeführt ist es gemäß einer Ausführungsform der Erfindung vorgesehen, dass im ersten Betriebsmodus des Telekommunikationsnetzes die dem zweiten Übertragungspfad zugeordnete zweite Teilmenge die leere Menge ist, was letztlich äquivalent dazu ist, dass die Mehrzahl von möglichen Pfadinformationen der dem ersten Übertragungspfad zugeordneten ersten Teilmenge von Pfadinformationen entspricht.

Hierdurch ist es erfindungsgemäß in vorteilhafter Weise möglich, dass im ersten Betriebsmodus (welcher beispielsweise einem Normalbetriebsmodus des Telekommunikationsnetzes entspricht) das Telekommunikationsnetz derart betrieben werden kann, dass die zweite Teilmenge von Pfadinformationen keine Rolle spielt, was wiederum dazu führt, dass letztlich die betrachtete Mehrzahl von Pfadinformationen (d.h. eine Mehrzahl von Kennungen) zu einer einzigen (dem Pfad vom ersten Randnetzknoten zum zweiten Randnetzknoten entsprechenden) Pfadinformation zusammenschrumpfen kann.

Erfindungsgemäß ist es bevorzugt vorgesehen, dass im ersten Betriebsmodus des Telekommunikationsnetzes die der ersten Teilmenge zugeordnete Mehrzahl von möglichen Pfadinformationen jeweils eine erste Teilpfadinformation und eine zweite Teilpfadinformation umfassen, wobei die erste Teilpfadinformation der der ersten Teilmenge zugeordneten möglichen Pfadinformationen jeweils identisch ist und wobei die zweite Teilpfadinformation der der ersten Teilmenge zugeordneten möglichen Pfadinformationen einen Informationsinhalt von 2 Bit oder von 3 Bit oder von 4 Bit oder von 5 Bit oder von 6 Bit, bevorzugt von 4 Bit, aufweist, wobei im ersten Betriebsmodus des Telekommunikationsnetzes insbesondere lediglich die erste Teilpfadinformation der Mehrzahl von möglichen Teilpfadinformationen ausgewertet wird.

Dadurch, dass die erste Teilpfadinformation der der ersten Teilmenge zugeordneten Pfadinformationen jeweils identisch ist, ist es erfindungsgemäß in einfacher Weise möglich, (im ersten Betriebsmodus) die betrachtete Mehrzahl von Pfadinformationen (d.h. die Mehrzahl von Kennungen) zu einer einzigen Pfadinformation (bzw. einer einzigen Kennung) zusammenzuschrumpfen, nämlich indem lediglich die erste Teilpfadinformation (d.h. der der ersten Teilpfadinformation entsprechende (identische) Teil der Kennungen der ersten Teilmenge von Pfadinformationen) als die einzige Pfadinformation herangezogen (bzw. ausgewertet) wird (und mithin die jeweiligen (sich jeweils innerhalb Pfadinformationen der ersten Teilmenge unterscheidenden) zweiten Teilpfadinformationen unberücksichtigt gelassen werden). Letztlich ist es beispielsweise vorgesehen, dass zur Definition der Pfadinformationen (gesamte) Kennungen umfassend beispielsweise 10 Bit oder von 16 Bit oder von 20 Bit oder von 24 Bit vorgesehen sind, wobei für die zweite Teilpfadinformation der Pfadinformationen 2 Bit oder 3 Bit oder 4 Bit oder 5 Bit oder 6 Bit, insbesondere 4 Bit, vorgesehen sind (insbesondere die jeweils niederwertigen Bits) und wobei für die erste Teilpfadinformation der Pfadinformationen die restlichen (insbesondere höherwertigen bzw. höherstelligen) Bits vorgesehen sind (d.h. im Fall von 20 Bits für die Definition der Kennung der gesamten Pfadinformation und 4 Bits für die zweite Teilpfadinformation stehen für die erste Teilpfadinformation 16 Bits zur Verfügung).

Ferner ist es erfindungsgemäß bevorzugt vorgesehen, dass in einem dem ersten Schritt vorangehenden dritten Schritt und während das Telekommunikationsnetz im zweiten Betriebsmodus betrieben wird, der erste Randnetzknoten eine Information erhält, wonach die im zweiten Betriebsmodus vorliegende erste Bandbreitenverfügbarkeit des ersten Übertragungspfades im Vergleich zur im ersten Betriebsmodus vorliegenden ersten Bandbreitenverfügbarkeit des ersten Übertragungspfades verringert ist und zumindest ein Teil der Mehrzahl von Pfadinformationen anstelle der dem ersten Übertragungspfad zugeordneten ersten Teilmenge der dem zweiten Übertragungspfad zugeordneten zweiten Teilmenge zugeordnet wird.

Hierdurch ist es erfindungsgemäß in vorteilhafter Weise möglich, dass - nach einem Übergang vom ersten zum zweiten Betriebsmodus - durch eine einfache Änderung der Zuordnung der (der jeweiligen Gruppe von Nutzdatenpakten zugeordneten) Pfadinformation zur ersten bzw. zweiten Teilmenge von Pfadinformationen (im vorliegend betrachteten Fall eine Änderung der Zuordnung dahingehend, dass eine zuvor (d.h. während des Vorliegens des ersten Betriebsmodus) der ersten Teilmenge zugeordnete oder zugehörige Pfadinformation danach (d.h. während des Vorliegens des zweiten Betriebsmodus) der zweiten Teilmenge zugeordnet ist) auf eine Änderung der ersten bzw. zweiten Bandbreitenverfügbarkeit (hier: der Verringerung der ersten Bandbreitenverfügbarkeit) reagiert werden kann.

Erfindungsgemäß ist es ferner bevorzugt vorgesehen, dass sich der erste Übertragungspfad und der zweite Übertragungspfad wenigstens in der Benutzung eines unterschiedlichen optischen Weges und/oder in der Benutzung von unterschiedlichen optischen Wellenlängen zwischen wenigstens zwei Netzknoten der Mehrzahl von Netzknoten unterscheiden.

Erfindungsgemäß ist es ferner bevorzugt vorgesehen, dass jede der Mehrzahl von möglichen Pfadinformationen einer auf einem der Übertragungspfade im jeweiligen Betriebsmodus verfügbaren Teilbandbreite entspricht, wobei als Teilbandbreite insbesondere eine für jede der Mehrzahl von möglichen Pfadinformationen feste Teilbandbreite von 1 GBd, 5 GBd, 10 GBd, 15 GBd, 20 GBd, 25 GBd, 30 GBd, 35 GBd, 40 GBd, 50 GBd, 60 GBd, 70 GBd, 80 GBd, 90 GBd oder 100 GBd entspricht.

Hierdurch ist es erfindungsgemäß in vorteilhafter Weise möglich, dass der Mehrzahl von möglichen Pfadinformationen einer vorgegebenen (und bevorzugt innerhalb der Mehrzahl der Pfadinformationen gleichen) "Bandbreiteneinheit" bzw. Teilbandbreite entspricht. Dadurch ist es erfindungsgemäß in einfacher und flexibler Weise möglich, die Belastung bzw. Beaufschlagung der verschiedenen Übertragungspfade innerhalb des Telekommunikationsnetzes mit bestimmten Verkehren bzw. mit einer bestimmten Verkehrslast in Abhängigkeit der auf ihnen zur Verfügung stehenden Bandbreitenverfügbarkeit vorzunehmen, wobei die Belastung der Übertragungspfade jeweils in Abstufungen von einer Teilbandbreite oder aber einer Mehrzahl von Teilbandbreiten vorgenommen werden kann. Dadurch ist sowohl eine flexible als auch eine einfache Verteilung der Verkehrslast und somit eine möglichst vollständige Auslastung der verschiedenen zur Verfügung stehenden Übertragungspfade (ohne eine Gefahr ihrer Überlastung) erfindungsgemäß möglich.

Erfindungsgemäß ist es insbesondere vorgesehen, dass die Mehrzahl von möglichen Pfadinformationen - und damit auch die Pfadinformation - eine Labelinformation eines MPLS (Multi Protocol Label Switched) Telekommunikationsnetzes sind oder eine analoge andere Protokoll-Suite als Basisinformationsgrundlage zur Verteilung und bzgl. des Formats von Labeln und Label-Informationen nutzen.

Ferner ist es gemäß einer Ausführungsform der Erfindung vorgesehen, dass der erste Übertragungspfad und/oder der zweite Übertragungspfad entweder lediglich den ersten und zweiten Randnetzknoten sowie eine Datenübertragungsstrecke zwischen beiden oder aber den ersten und zweiten Randnetzknoten sowie wenigstens einen weiteren Netzknoten der Mehrzahl von Netzknoten sowie eine Mehrzahl von Datenübertragungsstrecken umfasst.

Ein weiterer Gegenstand der vorliegenden Erfindung ist ein Telekommunikationsnetz zur effizienteren Datenübertragung im Telekommunikationsnetzgemäß Anspruch 8.

Es ist hierdurch erfindungsgemäß - auch mit Bezug auf das Telekommunikationsnetz - vorteilhaft möglich, dass auch auf der IP-Ebene des erfindungsgemäßen Telekommunikationsnetzes Möglichkeiten effektiv und vorteilhaft genutzt werden können, die aufgrund einer Elastizität auf der Ebene der physischen Datenübertragung, insbesondere der optischen Datenübertragung, möglich ist.

Ferner ist es erfindungsgemäß - auch mit Bezug auf das Telekommunikationsnetz - bevorzugt vorgesehen, dass im ersten Betriebsmodus des Telekommunikationsnetzes die dem zweiten Übertragungspfad zugeordnete zweite Teilmenge die leere Menge ist oder die Mehrzahl von möglichen Pfadinformationen der dem ersten Übertragungspfad zugeordneten ersten Teilmenge von Pfadinformationen entspricht.

Ferner ist es erfindungsgemäß - auch mit Bezug auf das Telekommunikationsnetz - bevorzugt, dass im ersten Betriebsmodus des Telekommunikationsnetzes die der ersten Teilmenge zugeordnete Mehrzahl von möglichen Pfadinformationen jeweils eine erste Teilpfadinformation und eine zweite Teilpfadinformation umfassen, wobei die erste Teilpfadinformation der der ersten Teilmenge zugeordneten möglichen Pfadinformationen jeweils identisch ist und wobei die zweite Teilpfadinformation der der ersten Teilmenge zugeordneten möglichen Pfadinformationen einen Informationsinhalt von 2 Bit oder von 3 Bit oder von 4 Bit oder von 5 Bit oder von 6 Bit, bevorzugt von 4 Bit, aufweist, wobei im ersten Betriebsmodus des Telekommunikationsnetzes insbesondere lediglich die erste Teilpfadinformation der Mehrzahl von möglichen Teilpfadinformationen ausgewertet wird.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer programmierbaren Einrichtung und/oder einem Netzknoten eines Telekommunikationsnetzes ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung und/oder Netzknoten eines Telekommunikationsnetzes ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines beispielhaften Telekommunikationsnetzes mit verschiedenen Netzknoten und Randroutern.
- **Figur 2**: zeigt eine schematische Ansicht eines anderen beispielhaften Telekommunikationsnetzes mit verschiedenen Netzknoten, wobei jedoch die Randrouter nicht dargestellt sind.
- **Figuren 3 und 4**: zeigen schematische Ansichten eines in verschiedenen Betriebsmodi betriebenen Telekommunikationsnetzes mit verschiedenen Netzknoten, wobei jedoch die Randrouter nicht dargestellt sind.
- **Figuren 5 und 6**: zeigen zwei schematische Beispiele von Zuordnungen von Pfadinformationen zu verschiedenen Übertragungspfaden innerhalb eines Telekommunikationsnetzes.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figur 1 ist eine schematische Ansicht eines beispielhaften Telekommunikationsnetzes mit verschiedenen Netzknoten LSR M, LSR F, LSR B, LSR H sowie Randroutern LER A, LER E1, LER E2 dargestellt. Das Telekommunikationsnetz ist erfindungsgemäß als ein Telekommunikationsnetz ausgebildet, welches eine physische Übertragungsebene umfasst, die insbesondere - jedoch nicht notwendigerweise zwingend bzw. nicht notwendigerweise zwingend in allen seiner Teilbereiche bzw. auf allen seiner Übertragungsstrecken (bzw. "Kanten" zwischen zwei Netzknoten) - in Form eines optischen Telekommunikationsnetzes ausgebildet ist. Dargestellt ist insbesondere der zentrale Teil eines als MPLS-Netz vorgesehenen Telekommunikationsnetzes (auch Kernnetz bzw. Core-Netz bzw. Backbone genannt), welches an seinem Rand sogenannte Randrouter Edge-Router (LER, Label Edge Router) aufweist, die unter Verwendung von IP Adressen arbeiten, und welches im Inneren des Telekommunikationsnetzes (d.h. innerhalb des in Figur 1 dargestellten Core Netzes) sogenannte Label-Switch-Router (LSR) als Netzknoten aufweist. An die Randrouter (LER) sind insbesondere die Kundenlokationen und deren Endgeräte angeschlossen, was jedoch in sämtlichen Figuren der Einfachheit halber nicht dargestellt ist. In einem solchen Telekommunikationsnetz sind die Randrouter bzw. die mit diesen verbundenen Netzknoten (im in Figur 1 beispielhaft dargestellten Fall der erste Randnetzknoten LSR M (für LER A) bzw. der zweite Randnetzknoten LSR H (für LER E1 und LER E2) typischerweise die Quellen und Senken der Verkehrsflüsse; jeder Randnetzknoten verfügt normalerweise über eine Information (insbesondere in Form einer Tabelle) bezüglich aller an ihn angebundenen möglichen Ziele und weist für diese einen Adressbereich auf, der an alle anderen Randnetzknoten über geeignete Protokolle kommuniziert wird. In einer in Figur 1 dargestellten beispielhaften Situation weist das dargestellte Telekommunikationsnetz den ersten Randnetzknoten (Label-Switch-Router) LSR M und (für Verkehre zu den Randroutern LER E1 bzw. LER E2) den zweiten Randnetzknoten LSR H sowie zusätzlich die Netzknoten (Label-Switch-Router) LSR Fund LSR B auf. Soll eine Anfrage vom ersten Randrouter LER A (an einer Stelle, etwa einer Stadt, A) zu einem (Ziel)Server (mit einer bekannten IP-Adresse) eines Kunden des Netzbetreibers in der Nähe einer Stelle (etwa eine Stadt) H gesandt werden, bewirkt dies, dass die Routingtabellen des ersten Randrouters (bzw. Eingangs-LER) LER A mittels der Zielserver-IP-Adresse nach dem korrekten zweiten Randrouter (bzw. Ausgangs-LER) durchsucht werden. Nachdem der zweite Randrouter (Ausgangs-LER) LER E1 bestimmt wurde, findet eine Abfrage in einer MPLS-Forwarding-Tabelle statt, damit ein MPLS-Label (bzw. eine Pfadinformation) bestimmt werden kann, mit dem der erste Randrouter LER A das Nutzdatenpaket versieht bzw. enkapsuliert und an den ersten Netzknoten bzw. den ersten Randnetzknoten (etwa den LSR M) schickt. In der MPLS-Wolke (d.h. im betrachteten Telekommunikationsnetz mit einer Mehrzahl von Netzknoten, umfassend Randrouter (LER) und Netzknoten, darunter Randnetzknoten (LSR M, LSR H) sowie Zwischennetzknoten (LSR F, LSR B)) kennt jeder Randnetzknoten die Ziel-Label (d.h. die Pfadinformation) aller anderen Netzknoten/Randnetzknoten. In jedem Hop wird in bekannter Weise gemäß MPLS-Prinzipien das aktuelle MPLS-Label gegen das nächste ausgetauscht. Die (lokalen) Label in den Zwischennetzknoten LSR F (bei einer Übertragung über den Pfad LSR F) bzw. LSR B (bei einer Übertragung über den Pfad LSR B) entsprechen somit einer eindeutigen Kennung der Ausgangsschnittstellen (d.h. des ersten bzw. zweiten Randnetzknotens LSR M, LSR H), die in der MPLS-Forwardingtabelle im ersten Randnetzknoten LSR M hinterlegt ist, d.h. der erste Randnetzknoten LSR M schickt das Nutzdatenpaket mit einer bestimmten Pfadinformation (d.h. einem bestimmten MPLS-Label bzw. einer bestimmten MPLS-Label Kennung bzw. einem Identifier) an den nächsten Netzknoten (der im betrachteten Beispiel des Telekommunikationsnetzes gemäß Figur 1 der Zwischennetzknoten LSR F ist). Dieses System ist deshalb so vorteilhaft, weil es für die beteiligten Netzknoten bzw. Randrouter vollkommen unerheblich ist, von wo ein Datenpaket bzw. Nutzdatenpaket (bzw. eine Gruppe von Nutzdatenpakten) herkommt; wichtig ist nur, welches Ziel das Datenpaket (bzw. die Gruppe) hat.

In bekannter Weise lassen sich damit innerhalb von MPLS-Netzen vergleichsweise leicht IP Resilienz-Mechanismen implementieren, denn falls ein Link zwischen zwei Zwischennetzknoten unterbrochen wird, kann der betreffende Netzknoten die Nutzdatenpakete (bzw. Gruppe von Nutzdatenpaketen) mit einem neuen Label einfach an einen anderen Zwischennetzknoten schicken, welcher das Nutzdatenpaket (bzw. die Gruppe von Nutzdatenpaketen) dann (aufgrund der mit dem Nutzdatenpaket bzw. der Gruppe verbundenen und vom ersten Randnetzknoten vergebenen Pfadinformation) korrekt weiterroutet. Jeder Netzknoten hat die notwendige Information darüber, welches Label (bzw. welche Pfadinformation) für welches Ziel bei seinen direkt benachbarten Netzknoten nötig ist. Für das bekannte ECMP-Verfahren werden die verschiedenen Übertragungspfadalternativen (also gleich langen bzw. gleich teuren) Wege nur anhand der (vom ersten Randnetzknoten vergebenen) Labels bzw. Pfadinformationen voneinander unterschieden. Falls ein ein Netzknoten also zu einem Ziel mehr als einen Weg kennt, die alle zueinander äquivalent sind, wird als Modulo-Operand die Anzahl der Ausgangsschnittstellen des Netzknotens verwendet, die gerade den verschiedenen Pfadinformationen (bzw. MPLS-Labels) entsprechen.

Die sowohl in der Figur 1 (mit Randroutern) als auch in den Figuren 2, 3 und 4 (ohne Randrouter) dargestellten Beispiele von Telekommunikationsnetzen stellen lediglich vereinfachte Telekommunikationsnetze dar. In der Realität eines Kernnetzes bzw. Backbone-Netzes - etwa für mehrere Hunderttausend oder mehrere Millionen von die Kommunikationsdienstleistungen des Telekommunikationsnetzes nutzenden Kunden - sind beispielsweise mehrere 10 oder mehrere 100 oder mehrere 1000, ggf. auch mehrere 10000, Randroutern (beispielsweise ungefähr 1000 Randrouter) vorgesehen und eine typischerweise geringere Anzahl von einigen bis einigen 10 Netzknoten (d.h. Randnetzknoten und Zwischennetzknoten, beispielsweise etwa 20 Rand- bzw. Zwischennetzknoten). Es lässt sich damit grob abschätzen, wie viele verschiedene Label (bzw. verschiedene Pfadinformationen) in Tabellen verwaltet werden müssen, somit von der Größenordnung her einige Zehntausend bis Hunderttausend bzw. Millionen Einträge. Die beschriebenen Mechanismen gehen davon aus, dass auf allen angebotenen Links ausreichend Kapazität vorhanden ist.

Damit dies sichergestellt ist, wird in bekannten bzw. herkömmlichen Telekommunikationsnetzen ein aufwendiges Monitoring der Auslastung mit Blick auf ein sorgfältiges Ausbalancieren der Gewichte der einzelnen Kanten im Load Balancing (denn das Gesamtgewicht eines Weges setzt sich aus der Summe der beteiligten Kanten zusammen) vorgenommen. Typischerweise werden Änderungen im Traffic Engineering vor einer faktischen Ausführung in komplexen Verkehrs- und Lastsimulationen untersucht. Ferner ist es bei bekannten Telekommunikationsnetzen möglich, dass - um alle auftretenden (Verkehrs)Bedarfe effizient und kostengünstig zu erfüllen - auch externe Nebenbedingungen beachtet werden, die von außerhalb des eigenen Netzes kommen und nicht beeinflusst werden können (insbesondere sogenannte Transit- oder Peeringverkehre, die von anderen Netz-Providern (bzw. Telekommunikationsnetzen) in das betroffene (bzw. betrachtete) Telekommunikationsnetz (IP Netz) eingespeist werden. Hierbei ist es bekannt, das sogenannte Segment Routing einzusetzen, d.h. es werden nicht nur die Ziel- und Transitknoten (Router bzw. Netzknoten) mit einem eindeutigen Kennzeichnung (bzw. einem Label) identifiziert (und für die Wegesuche berücksichtigt), sondern es wird auch einzelnen Kanten (zwischen den Netzknoten) ein Label zugewiesen. Anhand solcher Pfadinformation (bzw. Label) für Knoten und Kanten ist es möglich, dass konkrete Wege im Telekommunikationsnetz explizit eindeutig angegeben werden können, indem man die gewünschte Abfolge von Segmenten (also Knoten oder Kanten) in der Pfadinformation (insbesondere in Form von übereinander gestackten Protokollheadern) anführt.

Ein Beispiel hierfür wird bei dem in Figur 2 dargestellten Telekommunikationsnetz gegeben. Figur 2 zeigt eine schematische Ansicht eines (gegenüber der Figur 1 anderen) beispielhaften Telekommunikationsnetzes 100 mit verschiedenen Netzknoten 21, 22, 23, 24, 25, die nachfolgend auch als erster Netzknoten 21, zweiter Netzknoten 22, dritter Netzknoten 23, vierter Netzknoten 24 und fünfter Netzknoten 25 bezeichnet werden. Zwischen dem ersten Netzknoten 21 und dem zweiten Netzknoten 22 ist eine erste Kante 1 (bzw. Übertragungsstrecke) vorgesehen. Zwischen dem zweiten Netzknoten 22 und dem dritten Netzknoten 23 ist eine zweite Kante 2 vorgesehen. Zwischen dem dritten Netzknoten 23 und dem vierten Netzknoten 24 ist eine dritte Kante 3 vorgesehen. Zwischen dem zweiten Netzknoten 22 und dem fünften Netzknoten 25 ist eine vierte Kante 4 vorgesehen. Zwischen dem dritten Netzknoten 23 und dem fünften Netzknoten 25 ist eine fünfte Kante 5 vorgesehen. Auch das in Figur 2 dargestellte Telekommunikationsnetz 100 ist erfindungsgemäß als ein Telekommunikationsnetz 100 ausgebildet, welches eine physische Übertragungsebene umfasst, die insbesonderejedoch nicht notwendigerweise zwingend bzw. nicht notwendigerweise zwingend in allen seiner Teilbereiche bzw. auf allen seiner Übertragungsstrecken (bzw. "Kanten" zwischen zwei Netzknoten) - in Form eines optischen Telekommunikationsnetzes ausgebildet ist. Dargestellt ist insbesondere der zentrale Teil eines als MPLS-Netz vorgesehenen Telekommunikationsnetzes 100 (auch Kernnetz bzw. Core-Netz bzw. Backbone genannt). Bisher bekannte Standardimplementierungen von Routingprotokollen benötigen für die Wegewahl beginnend bei einem Einstieg ins Netz (erster Randnetzknoten) nur die Angabe des Zielknotens (zweiter Randnetzknoten) und ermitteln die dazwischenliegenden Transitknoten über Routingalgorithmen; entsprechend würde ohne weitere Angabe als kürzester Weg zwischen dem ersten Netzknoten 21 als erster Randnetzknoten (d.h. als Anfang einer betrachteten Übertragung eines Nutzdatenpaktes 300 bzw. einer Gruppe von Nutzdatenpakten 300 innerhalb des Telekommunikationsnetzes 100) und dem vierten Netzknoten 24 als zweiter Randnetzknoten (d.h. Ende der betrachteten Übertragung) der Weg entlang der ersten Kante 1, der zweiten Kante 2 und der dritten Kante 3 gewählt werden. Das gilt bei einer uniformen Metrik für alle Kanten (was äquivalent dazu ist, die Wege durch die Anzahl der benötigten Hops (von einem Netzknoten zum nächsten) zu klassifizieren). Mittels des angesprochenen Segment Routings ist es auch möglich einen Weg über den fünften Netzknoten 25 erzwingen (etwa durch die Vorgabe, die fünfte Kante 5 zu benutzen; die Abfolge der Labels könnte dann beispielsweise wie folgt aussehen: (25,5,24); dies würde einen (durch ein Routing bestimmten kürzesten) Weg zum fünften Netzknoten 25, einen Hop über die fünfte Kante 5 und den daran anschließenden (kürzesten) Weg zum vierten Netzknoten (als zweiten (d.h. End-) Randnetzknoten) bestimmen; alternativ hierzu wäre auch eine andere Wegbeschreibung des gleichen Pfades möglich, etwa eine Wegbeschreibung nur mittels der Kanten zu beschreiben: (1 ,4,5,3)). Mittels Segment Routing ist es daher möglich, vorgegebene Wege auf unterschiedliche Art zu beschreiben, wobei der kürzest mögliche Weg (entsprechend der zugrunde liegenden Metrik) gewählt wird, sofern es bei einer gegebenen Aufschlüsselung mehrere Möglichkeiten gibt.

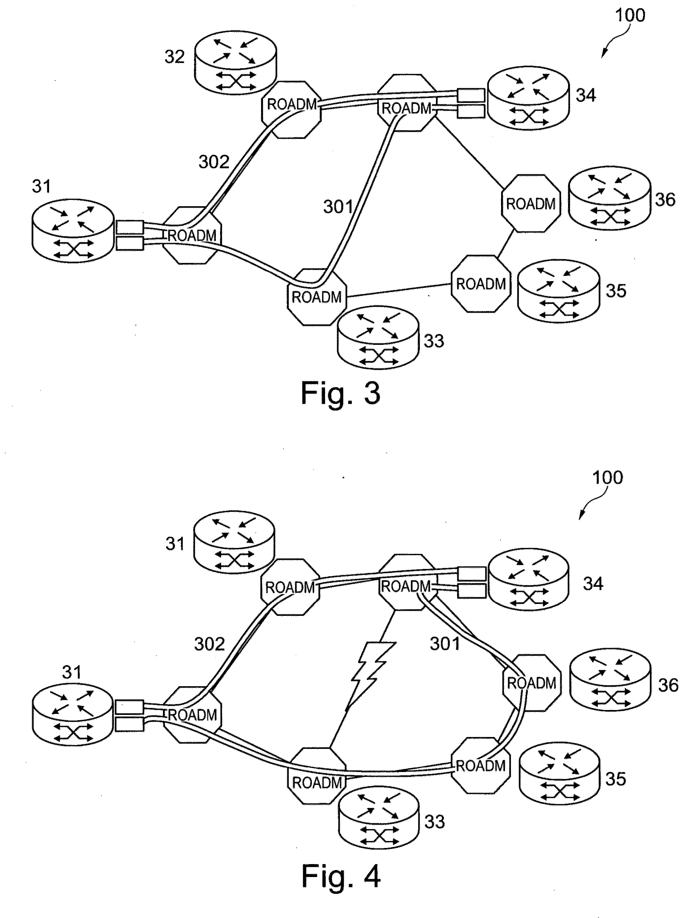

Die bei herkömmlichen Telekommunikationsnetzen angewandten Routingverfahren innerhalb der IP-Schicht (bzw. des IP Layer) lassen es nicht zu, die Möglichkeiten der Elastizität auf der physikalischen Schicht (insbesondere eine optischen Übertragungsschicht) effektiv und vorteilhaft zu nutzen. Dies wird anhand der Figuren 3 und 4 illustriert, die schematische Ansichten eines in verschiedenen Betriebsmodi betriebenen (gegenüber den Figuren 1 und 2 anderen, d.h. unterschiedlichen) Telekommunikationsnetzes 100 mit verschiedenen Netzknoten 31, 32, 33, 34, 35, 36 darstellen, wobei die Netzknoten nachfolgend auch als erster Netzknoten 31, zweiter Netzknoten 32, dritter Netzknoten 33, vierter Netzknoten 34, fünfter Netzknoten 35 und sechster Netzknoten 36 bezeichnet werden. Dass bei in herkömmlichen Telekommunikationsnetzen angewandten Routingverfahren innerhalb der IP-Schicht die Möglichkeiten der Elastizität auf der physikalischen Schicht nicht nutzbar sind, lässt sich anhand zweier dargestellter möglicher Übertragungspfade - einem ersten Übertragungspfad 301 und einem zweiten Übertragungspfad 302 - erkennen, die in der Darstellung gemäß Figur 3 dargestellt sind. Hierbei wird beim ersten und zweiten Übertragungspfad 301, 302 von zwei zueinander äquivalenten Wegen zwischen dem ersten Netzknoten 31 und dem vierten Netzknoten 34 ausgegangen, die beide auf der physikalischen Ebene (d.h. insbesondere in der Optik) aus zwei ungefähr jeweils gleich langen Pfaden bestehen (jeweils zwei sog. optische spans bzw. optische hops) und in der IP Topologie aus einem Hop zwischen dem (auf der IP-Ebene direkt benachbarten) ersten Netzknoten 31 und dem vierten Netzknoten 34 bestehen, weil die entsprechenden Wellenlängen transparent durch die optischen Transportknoten geführt werden (d.h. den zweiten bzw. dritten Netzknoten 32, 33), hier dargestellt durch ROADMs - reconfigurable Optical add drop multiplexer. Die Darstellung sowohl in Figur 3 als auch in den anderen Figuren verzichtet auf die Unterscheidung in Hin- und Rückrichtung; jedoch gelten alle Argumente bidirektional und die nicht dargestellte Rückrichtung wird analog durch eine zweite Faser realisiert.
Die Darstellung in Figur 4 entspricht (vom Telekommunikationsnetz 100 her bzw. dessen Netzknoten 31 bis 36) der Darstellung in Figur 3 bis auf den Unterschied, dass in Figur 4 schematisch ein Faserfehler auf der Strecke zwischen dem dritten Netzknoten 33 und dem vierten Netzknoten 34 vorliegt (d.h. ein entsprechender, diesen Faserfehler berücksichtigender Betriebsmodus wird in Figur 4 dargestellt). Infolge des Faserfehlers, muss der Verlauf des ersten Übertragungspfads 301 (gegenüber der Darstellung in Figur 3) geändert werden; für den ersten Übertragungspfad 301 wird ein neuer Lichtpfad aufgesetzt. Für die IP-Topologie ergibt sich hierdurch keine wesentliche Änderung: Wie vorher besteht die Verbindung zwischen dem ersten Netzknoten 31 und dem vierten Netzknoten 34 (aus IP-Sicht) aus je einem Hop (für beiden Varianten des ersten Übertragungspfads 301, sowohl gemäß Figur 3 als auch gemäß Figur 4); jedoch ist der erste Übertragungspfad 301 durch die Änderung wesentlich länger geworden (mit nun vier optical spans, was mit großer Wahrscheinlichkeit bzw. möglicherweise einen Einfluss auf die maximal mögliche Übertragungsrate hat; typischerweise würde die zweite Bandbreitenverfügbarkeit des zweiten Übertragungspfads gemäß Figur 4 geringer sein als gemäß Figur 3).

Falls nun angenommen wird,
-- dass die Auslastung der IP-Links vor dem Fehler bei 80% der IP Kapazität liegt und die Schnittstellen eine nominelle Datenrate von 400Gbit/s haben (d.h. es liegt eine Arbeitslast von jeweils 320 Gbit/s für den ersten und zweiten Übertragungspfad 301, 302 vor- wobei die Übertragungspfade 301, 302 insbesondere als unterschiedliche Wellenlängen realisiert sind) und
-- dass nach (bzw. mit) dem Fehler die Übertragungsrate des ersten Übertragungspfades 301 nur noch bei 300 Gbit/s liegt,
gibt es bei herkömmlichen Telekommunikationsnetzen (aufgrund der verwendeten Routing-Protokolle bzw. Routing-Vorgaben auf der IP-Schicht) lediglich die Möglichkeit, die zum ersten Übertragungspfad 301 gehörende IP-Schnittstelle komplett herunterzufahren, denn eine asymmetrische Aufteilung der Verkehrslast ist mit der aktuell verfügbaren Hardware und/oder aufgrund der verwendeten Routing-Protokolle bzw. Routing-Vorgaben auf der IP-Schicht nicht möglich. Wünschenswert wäre in diesem konkreten Fall z.B. eine Bandbreitenverteilung dahingehend, dass beispielsweise 360 Gbit/s auf dem zweiten Übertragungspfad 302 und 280 Gbit/s auf dem ersten Übertragungspfad 301 übertragen werden. Da der IP Layer damit aber nicht umgehen kann, ist es bei herkömmlichen Telekommunikationsnetzen nötig, zusätzliche, kostspielige(IP) Ersatzkapazität im Telekommunikationsnetz vorzuhalten. Die Gewinne und Einsparungen, die durch flexible optische Transportlösungen möglich wären, können nicht genutzt werden. Das liegt im Endeffekt daran, dass das Traffic Engineering und die eingesetzten MPLS Mechanismen für alle Komponenten gleichermaßen gelten (und somit scheidet eine lokale - gewissermaßen auf einen solchen Fehlerfall maßgeschneiderte - Lösung aus, weil vorgenommene Änderungen zwischen dem ersten und vierten Netzknoten 31, 34 (im Beispiel der Figuren 3 und 4) nicht nur die ausgewählte Verkehrsbeziehung betreffen, sondern netzweit Anwendung finden würden, so dass aufgrund der hohen Abhängigkeit zwischen allen Netzknoten und Kanten im Telekommunikationsnetz Auswirkungen von lokalen Änderungen auf das Gesamtnetz sind nicht einfach abzuschätzen sind.

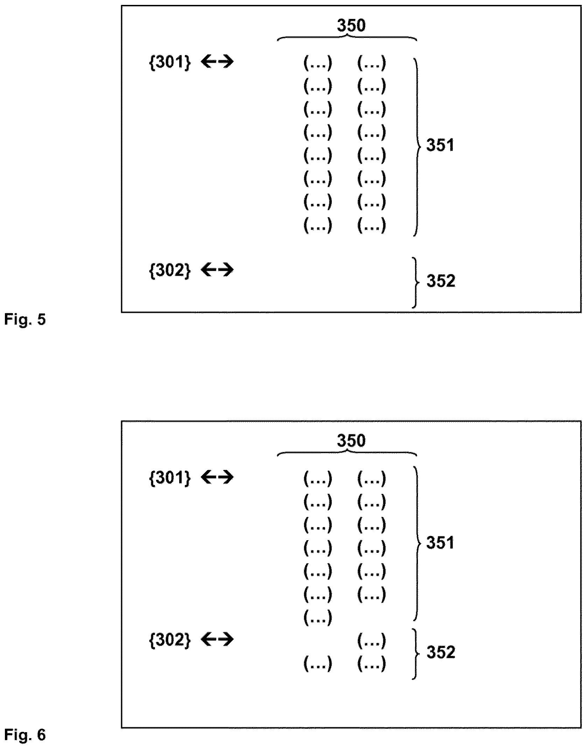

In der Figur 5 und der Figur 6 ist jeweils eine schematische Ansicht eines Beispiels einer Zuordnung von Pfadinformationen zu verschiedenen Übertragungspfaden innerhalb eines Telekommunikationsnetzes 100 schematisch dargestellt. Aus der Figur 5 geht hervor, dass von der Menge der möglichen Pfadinformationen 350 eine erste Teilmenge 351 dem ersten Übertragungspfad 301 und eine zweite Teilmenge 352 dem zweiten Übertragungspfad zugeordnete sind. Aus der Figur 5 geht hervor, dass von der Menge der möglichen Pfadinformationen 350 (im Beispiel umfassend 16 angedeutete einzelne (Identifier von) Pfadinformationen) eine dem ersten Übertragungspfad zugeordnete erste Teilmenge 351 im Beispiel alle diese 16 angedeuteten unterschiedlichen (Identifier von) Pfadinformationen aufweist, während eine dem zweiten Übertragungspfad 302 zugeordnete zweite Teilmenge 352 im Beispiel die leere Menge ist, d.h. keine Pfadinformationen aufweist. Aus der Figur 6 geht hervor, dass von der Menge der möglichen Pfadinformationen 350 (im Beispiel umfassend 16 angedeutete einzelne (Identifier von) Pfadinformationen) eine erste Teilmenge 351 (im Beispiel umfassend 13 angedeutete unterschiedliche (Identifier von) Pfadinformationen) dem ersten Übertragungspfad 301 und eine zweite Teilmenge 352 (im Beispiel umfassend 3 angedeutete unterschiedliche (Identifier von) Pfadinformationen) dem zweiten Übertragungspfad 302 zugeordnet sind. Die Figuren 5 und 6 sind ein Beispiel für die Zuordnung von (Identifiern von) Pfadinformationen 350 zu den einzelnen Übertragungspfaden 301, 302 für unterschiedliche Betriebsmodi des Telekommunikationsnetzes: Beispielhaft möge im ersten Betriebsmodus die Zuordnung gemäß Figur 5 gelten, während im zweiten Betriebsmodus die Zuordnung gemäß Figur 6 gilt, weil insbesondere die Bandbreitenverfügbarkeit des ersten Übertragungspfades 301 beim Übergang vom ersten Betriebsmodus zum zweiten Betriebsmodus geringer geworden ist.

Gemäß der vorliegenden Erfindung wird bei einem Telekommunikationsnetz 100 eine Kombination von Routingverfahren und flexiblen optischen Schnittstellen vorgenommen: Anders als bei herkömmlichen Telekommunikationsnetzen werden erfindungsgemäß die IP/MPLS Verkehrsströme nicht mehr nur über die Angabe der Ziel-Adresse des Ausgangs LER (d.h. des zweiten Randnetzknotens 24, 34) identifiziert, sondern es wird das gleiche Ziel bzw. die gleiche Kombination von erstem Randnetzknoten 21, 31 und zweitem Randnetzknoten 24, 34 mit einer geeigneten Menge an zusätzlichen Unterscheidungskennern (d.h. verschiedenen Pfadinformationen 350) unterschieden.

Insbesondere ist es erfindungsgemäß gemäß einer Variante der Erfindung möglich, das Telekommunikationsnetz 100 im Regelfall (d.h. in einem Normalbetriebsmodus) genauso zu betrieben wie herkömmliche Telekommunikationsnetze (d.h. der gleichen Kombination von erstem Randnetzknoten 21, 31 und zweitem Randnetzknoten 24, 34 wird eine Pfadinformation (und nicht eine geeignete Menge an verschiedenen Pfadinformationen 350) zugeordnet (bzw. die zusätzlich (erfindungsgemäß) eingeführte Unterscheidung mehrerer Pfadinformationen 350 wird ignoriert). Gemäß einer solchen Variante der Erfindung wird die Mehrzahl an verschiedenen Pfadinformationen erst im Fehlerfall (zweiter Betriebsmodus) berücksichtigt bzw. spielt die zusätzliche Vielfachheit der Pfadinformationen bezüglich der der Ziele eine Rolle und wird eingesetzt, um mit lokal geänderten Datenübertragungskapazitäten umzugehen.
Gemäß einer weiteren Variante der Erfindung ist es jedoch auch möglich, das Telekommunikationsnetz 100 bereits im Regelfall (d.h. im ersten Betriebsmodus) mit der Mehrzahl von Pfadinformationen zu betreiben.

Für die Umsetzung der allgemeinen erfindungsgemäßen Idee werden die aus herkömmlichen Telekommunikationsnetzen, insbesondere MPLS-Telekommunikationsnetzen, bekannten IP-Routingmechanismen erweitert. Lediglich beispielhaft wird im Folgenden von einer Referenzkapazität von 400Gbit/s in den optischen Schnittstellen, d.h. auf der physischen Schicht ausgegangen. Ferner wird im Folgenden Beispielhaft davon ausgegangen, dass kleinste Änderungen der Bandbreite (d.h. eine Änderung von Teilbandbreiten) von 25Gbit/s vorgesehen sind (d.h. dass jede der Mehrzahl von möglichen Pfadinformationen 350 einer auf einem der Übertragungspfade 301, 302 im jeweiligen Betriebsmodus verfügbaren (festen und für alle Pfadinformationen gleiche) Teilbandbreite entspricht). Obwohl andere Zahlenwerte nicht ausgeschlossen werden sollen, bietet sich die Verwendung von 400 Gbit/s (oder GBd) und 25 Gbit/s (bzw. GBd) deshalb an, weil sich damit die Gesamtbandbreite einer, auf der IP-Ebene ansprechbaren Schnittstelle mit insgesamt 16 Teilbandbreiten ergibt, d.h. bei k = 16 Chunks (engl. "Brocken", d.h. Brocken von Teilbandbreiten) für eine Gesamtkapazität einer auf IP-Ebene ansprechbaren Schnittstelle ist es beispielsweise möglich, dass als die einzelnen Teilbandbreiten durch eine einzige Hexadezimalziffer im Hexadezimalsystem (d.h. durch 4 Bit) identifiziert werden können. Außerdem bieten sich 25GBd Chunks bzw. Teilbandbreiten von 25 GBd an, weil dies besonders geeignet erscheint, einer kleinsten Granularität bei einer Brutto-Symbolrate von ca. 28GBd zu entsprechen bzw. dann genau einem Bit pro Symbol entspricht (der Unterschied zwischen 28 und 25 erklärt sich durch den zusätzlich benötigten Overhead für z.B. Framing und Forward Error Correction). Kleinste relative Granularitäten (bzw. Teilbandbreiten) von weniger als 1/16 pro optischem Träger sind bei Mehrträger-Signalen sowohl bei 400Gbits als auch bei 1 000Gbit/s nicht zu erwarten, jedoch ist es erfindungsgemäß möglich, eine größere Anzahl als k = 16 verschiedene Teilbandbreiten pro über die IP-Schicht ansprechbarer Schnittstelle vorzusehen, insbesondere k = 32 verschiedene Teilbandbreiten (d.h. es sind zu deren Kodierung 5 Bit notwendig) bzw. k = 64 (d.h. es sind zu deren Kodierung 6 Bit notwendig). Im Folgenden wird jedoch beispielhaft von k = 16 ausgegangen.

Um zum Beispiel gemäß der Figur 1 zurückzukommen, wird der Zwischennetzknoten LSR H für die Signalisierung der für das Ziel LER E1 benutzten Label (d.h. Pfadinformationen 350) nicht mehr nur ein Label (d.h. eine einzige Pfadinformation wie bei herkömmlichen Telekommunikationsnetzen mit MPLS-Funktionalität) bekannt geben, sondern k = 16 (für diesen Übertragungspfad mögliche) Pfadinformationen 350, beispielsweise dadurch markiert bzw. kodiert, dass ein zusätzlicher Wert aus dem Bereich 0 bis F (d.h. einer Hexadezimalziffer) zu der Kennung und Unterscheidung dieser möglichen Pfadinformationen 350 hinzugefügt wird. Analog zu oben wird diese Information an alle Router bzw. Netzknoten des Telekommunikationsnetzes 100 weiterverteilt und dort (im ersten Betriebsmodus, d.h. insbesondere in einem Normalbetriebsmodus) genauso verwendet. Die Label-Tabelle im Randrouter LER A im obigen Beispiel gemäß der Figur 1 enthält also für das Ziel LER E1 und für den ersten und zweiten Übertragungspfad 301, 302 nicht mehr nur zwei Einträge, sondern insgesamt 32, nämlich je 16 für jeden der Übertragungspfade 301, 302. Wird nun in einem zweiten Betriebsmodus ein Fehlerfall betrachtet, bei dem nach einer vergleichsweise kurzen transienten Übergangsphase, während der die Optical Restoration/Recovery stattfindet, die optische Verbindung zwischen dem Zwischennetzknoten LSR F und dem Zwischennetzknoten LSR H nicht mehr eine Kapazität von 400 Gbit/s hat, sondern nur noch von 325 Gbit/s, so wird diese Information durch geeignete Protokolle - analog zur Verteilung der Label bzw. Pfadinformationen - durch das Netz propagiert, bevorzugt jedoch lediglich zwischen den Zwischennetzknoten LSR. Im Zwischennetzknoten LSR M wird diese Information dann folgendermaßen ausgewertet: Nicht mehr alle k = 16 Label (bzw. Pfadinformationen), die vom LER A kommend über den Zwischennetzknoten LSR F hätten geführt werden sollen, werden auch wirklich dorthin weitergeschickt; stattdessen bekommt eine entsprechende Anzahl von Einträgen (hier 3, weil dies der Verringerung der Bandbreitenverfügbarkeit von 3*25 Gbit/s entspricht) einen neuen Weg zugewiesen, d.h. in einer entsprechen Labeltabelle bzw. Tabelle von Pfadinformationen sind diese drei verschiedenen Pfadinformationen anstelle dem ersten Übertragungspfad dem zweiten Übertragungspfad zugeordnet, d.h. für diese drei Pfadinformationen steht als Next Hop nicht der Zwischennetzknoten LSR F, sondern der Zwischennetzknoten LSR B (unter der Annahme, dass nur die dargestellte Topologie zur Verfügung steht und auch der Weg über den Zwischennetzknoten LSR B noch ausreichend freie Kapazität hat; jedoch muss der Aspekt der Ersatzkapazität immer berücksichtigt werden). Das exakte Verfahren, wie diese neuen Wege bestimmt und verteilt werden, muss an dieser Stelle nicht explizit festgelegt werden. Zur Festlegung wie die neuen Wege bestimmt werden, kann beispielsweise der Algorithmus "k-shortest Path" verwendet werden. Dies ist eine Erweiterung der klassischen Kürzesten-Wege-Suche über bekannte Algorithmen wie Dijkstra oder Bellman-Ford. Der "k-shortest Path" Algorithmus berechnet auf Basis einer vorgegebenen Topologie und der Kosten für jeden Pfadanteil nicht nur den einen kürzesten Pfad (oder mehrere gleich kurze Pfade), sondern auch weitere nicht-kürzeste Pfade bis eine Gesamtzahl von k alternativen Pfaden gefunden wurde. Diese Pfade werden vorberechnet und können z.B. einer Eigenschaft "Priorität" oder "Präferenz" zugeordnet werden. Alternativ hierzu kann auch vorgesehen sein, dass Wegekosten mit Hops gleichgesetzt werden; die Regelwege sind dann die echt kürzesten Pfade und im Fehlerfall wird für die betroffenen Pfadteile auf einen um einen oder zwei Hops längeren Pfad ausgewichen. Die Komplexität dieser Berechnungen ist nicht zwangsläufig größer als bei konventionellen Routing-Berechnungen, denn beim "k-shortest Path" Algorithmus wird nur auf Zwischenergebnisse zurückgegriffen, die sowieso für das "shortest Path" Routing benötigt werden, Der einzige Unterschied besteht in der Dauer der Berechnung und in dem persistenten Vorhalten ursprünglich temporärer Informationen.
In einem größeren MPLS-basierten Kernnetz würde die Verteilung auf andere Pfade also so geschehen, dass für die vom Fehler betroffene Anzahl von nominell 25Gbits/s-Einheiten - d.h. für die jeweils eine Pfadinformation aus der Menge der möglichen Pfadinformationen 350 existiert - (allgemein: einer Untermenge der k Anteile) ein neuer Eintrag in die Forwardingtabelle geschrieben wird oder aber ein bereits vorkonfigurierter Pfad aktiviert wird (d.h. statt der auf einen bestimmten ersten Übertragungspfad bezogenen ersten Teilmenge 351 (von Pfadinformationen) der auf einen bestimmten zweiten Übertragungspfad bezogenen zweiten Teilmenge 352 (von Pfadinformationen) zugeordnet wird). Diese Einträge können dann auch mittels Segment Routing längere Wege repräsentieren, die durch das herkömmliche IP-Routing (Pfad mit minimalem Gewicht) nicht in Betracht gekommen wären. Daher steht Segment Routing in natürlicher symbiotischer Beziehung zu der vorliegenden Erfindung. Im Beispiel etwa der Figur 1 wäre dies beispielsweise durch die Hinzunahme eines weiteren Zwischennetzknotens (in Figur 1 nicht dargestellt) etwa zwischen den Zwischennetzknoten LSR M und LSR F gegeben. Von diesem weiteren Zwischennetzknoten könnten Nutzdatenpakete (bzw. Gruppen von Nutzdatenpaketen), die beispielsweise 3 betroffenen (Identifiern von) Pfadinformationen entsprechen (d.h. eine Bandbreite von im Beispiel 3x25GBd repräsentieren), über eine weitere (in Figur 1 nicht dargestellte) Verbindung zum Zwischennetzknoten LSR H gesandt werden. Die Tabelle im LSR M würde in diesem Netzzustand (Fehlerfall) bzw. in diesem Betriebsmodus des Telekommunikationsnetzes 100 dann die resultierende Zuordnung enthalten: 13 Pfadinformation sind dem Übertragungspfad über den Zwischennetzknoten LSR F zugeordnet, während 3 Pfadinformationen dem Übertragungspfad über den nicht dargestellten weiteren Zwischennetzknoten zugeordnet sind. Dabei ist es nicht unbedingt notwendig, dass die (zwischen den verschiedenen Übertragungspfaden 351, 352) "verschobenen" Pfadinformationen (bzw. damit einhergehend die "Chunks" von Teilbandbreiten einer gesamten Bandbreitenverfügbarkeit) in der Forwarding Tabelle am Stück, d.h. zusammenhängend (hinsichtlich ihrer Identifier), bleiben. Vielmehr können diese 25Gbit/s-Chunks völlig unabhängig voneinander betrachtet werden.

Da die im Beispiel (durch eine Fehlersituation) beeinträchtigte Kante des Telekommunikationsnetzes (zwischen dem Zwischennetzknoten LSR F und dem Zwischennetzknoten LSR H) nicht nur von der Verkehrsbeziehung zwischen dem Randrouter LER A und dem Randrouter LER E1 genutzt wird, sondern über diese Kante auch noch eine Vielzahl weiterer Verkehrsbedarfe geführt wird, wird für alle diese Verkehrsbedarfe das gleiche Verfahren angewendet, d.h. es wird die betroffene Anzahl an Teilbandbreiten (bzw. "Chunks" des benötigten Bandbreitenbedarfs) - mithin die betroffene Anzahl an Pfadinformationen (bzw. von MPLS-Labels) - über andere IP-Kapazitäten abgeführt, wobei die Einheiten von 25Gbit/s dabei nur als gedankliche Größe zu sehen sind, denn in der Regel wird kein Interface im regulären Betrieb bis an die Auslastungsgrenze gefahren; im Gegenteil sind in der Regel immer einige Prozent "Luft" nach oben (notwendigerweise, um Spitzen im Bandbreitenbedarf des Paketverkehres abzufangen). Je nach Planungsvorgabe liegt diese Grenze bei etwa 80% der nominellen Auslastung. Außerdem sind die Beiträge der einzelnen Verkehrsbeziehungen auch nicht gleichverteilt, sondern man findet entlang der Kanten einen statistischen und dynamisch veränderlichen Mix. Dies gilt nicht nur für die Zusammensetzung der Summenbandbreiten in der Richtung von einem Randrouter zu einem Rand- oder Zwischennetzknoten (d.h. LER zu LSR, d.h. in uplink-Richtung) des Telekommunikationsnetzes 100, sondern mit hinreichender Genauigkeit auch für die Verteilung innerhalb der Einheiten bzw. Teilbandbreiten (bzw. "Chunks") von 25Gbit/s. Die aktuell eingesetzten Hashing-Algorithmen sind so weit entwickelt und die Entropie der Protokollheader ist bei aggregierten Verkehren bis auf pathologische Fälle ausreichend groß, um eine nahezu gleiche Verteilung zwischen den Ausgangschnittstellen zu erreichen. Alles zusammen hat zur Folge, dass sich die restlichen Einheiten (bzw. "Chunks") von 25 Gbit/s Teilbandbreite die verbleibende Kapazität aller optischen Links teilen können und dass die neu zu verteilenden "Überschuss-Chunks" leicht auf die Ersatz-Kanten verteilt werden können (wie angedeutet, solange die Worst Case-Ersatzkapazität planerisch berücksichtigt ist, was in der Regel der Fall ist).

Die besondere Eleganz des erfindungsgemäßen Verfahrens besteht darin, dass die Fehlerbehandlung in der Regel nur innerhalb des Netzes der Randnetzknoten bzw. Zwischennetzknoten (d.h. dem LSR-Netz) stattfindet und der Fehler keine Auswirkung auf die Randrouter (LER) hat. Die Randrouter vergeben auch nach einem Fehler für die ihnen zugeordneten Quellverkehre die entsprechenden Pfadinformationen (bzw. MPLS-Labels), die erfindungsgemäß um den Faktor k erweitertet werden. Die Randrouter (LER) müssen über den Fehler noch nicht einmal informiert werden, weil sie sowieso nur Kenntnisse über den zweiten Randrouter (d.h. den Ziel-LER) haben und agnostisch gegenüber den Details der Wegeführung im Kernnetz sind. Die Vergabe der Label (bzw. der Pfadinformationen) im Randrouter LER ist unabhängig von der Zuordnung der Label auf konkrete Pfade (welche erfindungsgemäß im Randnetzknoten stattfindet). Deshalb muss kein zusätzlicher komplexer Aufwand betrieben werden, um die Verteilung des Gesamtverkehrs und die Querbeziehungen der einzelnen Verkehrsbedarfe zu berücksichtigen. Vorgaben und Anpassungen bzgl. weiterer geforderter Eigenschaften wie z.B. "minimale Laufzeit" oder ähnliches bleiben hier zunächst unberücksichtigt, können aber leicht nachgetragen werden. Die Bevorzugung bestimmter Verkehrsanteile in der Weise, dass gezielt besondere (i.e. kürzere) Wege zugewiesen werden, entspräche dann einer effektiven Diskriminierung der anderen Verkehre und müsste aus Regulierungssicht bewertet werden. Des Weiteren ist die Wahl der Chunk-Proportionierung ein globaler Wert des Netzes (er ergibt sich aus dem Quotienten der kleinsten wählbaren Datenratengranularität elastischer Interface und der nominell größten eingesetzten Schnittstellenübertragungsrate im Netz). Will man von Ausbaustufen und zukünftigen Entwicklungen im Netz unabhängig sein, kann man auch eine feste kleinste Chunkbreite von z.B. 5 Gbits/s festlegen. Eintreffender Verkehr muss dann individuell pro Eingangs-Schnittstelle im Router gehashed und in 5 Gbit/s Chunks eingeteilt werden. Bei einem 40Gbit/s Interface ergäben also 8 Chunks. Ein Wert von maximal K = 16 wird hier aber als realistisch angesehen.

Mit dem in der Erfindung vorgeschlagenen Ansatz ist es erstmalig möglich, flexible Bandbreiten im Transport (L0, L1) für den Router-Layer überhaupt und vorteilhaft nutzbar zu machen. Damit können deutliche Auslastungsverbesserungen bei zukünftigen Interfacen/Transpondern mit flexiblen Datenraten erzielt werden. Diese höheren Auslastungen teurer Weitverkehrsinterface führen zu kostengünstigeren Netzimplementierungen. Das kann zwar besonders vorteilhaft im Fehlerfall bei "optisch elastischen Netzen" (EON) ausgenutzt werden. Es kann aber auch generell bei Kapazitätsunsymmetrien paralleler IP Links - auch im Normalfall - verwendet werden. Dieser Fall tritt im normalen Netzbetrieb immer dann auf, wenn mehrere Interface mit unterschiedlichen, aber konstanten Kapazitäten (also keine FlexRate Schnittstellen) verwendet werden, z.B. bei der Neuinstallation einer festen 100 Gbit/s Schnittstelle parallel zu einer bestehenden festen 10 Gbit/s Schnittstelle. Im herkömmlichen Betriebsmodus müssen die bestehenden 10 Gbit/s Schnittstellen abgeschaltet werden. Um die Netzkosten für einen Netzbetreiber dennoch in einem akzeptablen Rahmen zu halten, werden die ausgemusterten Interface mit erheblichem Personalaufwand möglichst zu einem anderen Router transportiert und dort wiederverwendet.

Gemäß der vorliegenden Erfindung sind die Forwarding-Tabellen in den Routern um einen Faktor k (in den Beispielen k = 16) größer aus (maximal um den Faktor, der sich aus einem Verhältnis der größten Übertragungsrate der Schnittstellen im Vergleich zur kleinsten kontrollierbaren Bandbreitenänderung (bzw. Teilbandbreite) ergibt). Um diesen konstanten Faktor werden sich die Herausforderungen an die Skalierbarkeit und an den benötigten Speicherplatz verschärfen. Das ist jedoch bei der ständig wachsenden Performance der verfügbaren Router-Hardware (mit einer deutlich verbesserten Nutzbarkeit von großen Forwarding-Tabellen) (immer) weniger limitierend. Das "online" Traffic Engineering (TE) - d.h. während des Betriebs des Telekommunikationsnetzes 100 - wird durch die Erfindung deutlich effizienter (im Sinn einer verbesserten Verwendung der Netzresourcen).

Insgesamt ist es gemäß der vorliegenden Erfindung möglich, durch eine geeignete Erweiterung bestehender MPLS-Label das Ziel zu erreichen, die Granularitäten eines elastischen Transportnetzes (insbesondere optischen Transportnetzes) auch für den Paket-Layer (IP-Layer)' vorteilhaft nutzbar zu machen. Hierzu werden die k Unterlabels (oder um den Faktor k erweiterte Labels bzw. die entsprechenden Pfadinformationen 350) erzeugt. Auf dieser Basis können die speziell im Fehlerfall schwankenden Bandbreiten des optischen Transports für den Paket-Layer überhaupt erst nutzbar gemacht werden.

## Patentansprüche

1. Verfahren zur effizienteren Datenübertragung in einem Telekommunikationsnetz (100), insbesondere beruhend auf optischen Datenübertragungskomponenten zum Wellenlängen-Multiplex-Betrieb (WDM, wavelength division multiplex) einer Mehrzahl von verschiedenen optischen Wellenlängen, wobei das Telekommunikationsnetz (100) eine Mehrzahl von Netzknoten (21 - 25, 31 - 36) und zwischen den Netzknoten (21 - 25, 31 - 36) vorliegende Datenübertragungsstrecken (1, 2, 3, 4, 5) aufweist, wobei eine Pfadinformation (310) zur Übertragung einer Gruppe von Nutzdatenpaketen (300) im Telekommunikationsnetz (100) entlang eines Übertragungspfades zwischen einem ersten Randnetzknoten (21, 31) und einem zweiten Randnetzknoten (24, 34) der Mehrzahl von Netzknoten (21 - 25, 31 - 36) verwendet wird,
wobei das Telekommunikationsnetz (100) zur Übertragung der Gruppe von Nutzdatenpaketen (300) vom ersten Randnetzknoten (21, 31) zum zweiten Randnetzknoten (24, 34) wenigstens einen ersten Übertragungspfad (301) und einen zweiten Übertragungspfad (302) aufweist,
wobei die der Gruppe von Nutzdatenpaketen (300) zugeordnete Pfadinformation (310) durch den ersten Randnetzknoten (21, 31) in Abhängigkeit des zweiten Randnetzknotens (24, 34) und in Abhängigkeit einer ersten Bandbreitenverfügbarkeit des ersten Übertragungspfades (301) und einer zweiten Bandbreitenverfügbarkeit des zweiten Übertragungspfades (302) im Telekommunikationsnetz (100) zwischen dem ersten Randnetzknoten (21, 31) und dem zweiten Randnetzknoten (24, 34) bestimmt wird,
wobei das Telekommunikationsnetz (100) in einem ersten Betriebsmodus und in einem zweiten Betriebsmodus betreibbar ist, wobei sich wenigstens eine der ersten und zweiten Bandbreitenverfügbarkeit im zweiten Betriebsmodus von derjenigen im ersten Betriebsmodus unterscheidet,
wobei das Verfahren die folgenden Schritte aufweist:
-- in einem ersten Schritt wird im Telekommunikationsnetz (100) eine Mehrzahl von möglichen Pfadinformationen (350) für die Datenübertragung der Gruppe von Nutzdatenpaketen (300) vom ersten Randnetzknoten (21, 31) zum zweiten Randnetzknoten (24, 34) generiert oder aktualisiert, wobei die Mehrzahl von möglichen Pfadinformationen (350) eine dem ersten Übertragungspfad (301) zugeordnete erste Teilmenge (351) von Pfadinformationen und eine dem zweiten Übertragungspfad (302) zugeordnete und von der ersten Teilmenge (351) disjunkte zweite Teilmenge (352) von Pfadinformationen umfasst oder die Mehrzahl von möglichen Pfadinformationen (350) der dem ersten Übertragungspfad (301) zugeordneten ersten Teilmenge (351) von Pfadinformationen entspricht, wobei die Zuordnung der Mehrzahl von Pfadinformationen (350) zur ersten oder zur zweiten Teilmenge (351, 352) vom Betriebsmodus des Telekommunikationsnetzes (100) abhängig ist,
-- in einem dem ersten Schritt nachfolgenden zweiten Schritt wird die Pfadinformation (310) zur Übertragung der Gruppe von Nutzdatenpaketen (300) - aus der Mehrzahl von möglichen Pfadinformationen (350) - bestimmt, wobei die Pfadinformation (310) im ersten Betriebsmodus Element der dem ersten Übertragungspfad (301) zugeordneten ersten Teilmenge (351) der Mehrzahl von Pfadinformationen (350) und im zweiten Betriebsmodus Element der dem zweiten Übertragungspfad (302) zugeordneten zweiten Teilmenge (352) der Mehrzahl von Pfadinformationen (350) ist,
wobei die Mehrzahl von möglichen Pfadinformationen (350) - und damit auch die Pfadinformation (310) - eine Labelinformation eines MPLS, Multi Protocol Label Switched, Telekommunikationsnetzes sind.

2. Verfahren nach Anspruch 1, **dadurch gekennzeichnet, dass** im ersten Betriebsmodus des Telekommunikationsnetzes (100) die dem zweiten Übertragungspfad (302) zugeordnete zweite Teilmenge (352) die leere Menge ist oder die Mehrzahl von möglichen Pfadinformationen (350) der dem ersten Übertragungspfad (301) zugeordneten ersten Teilmenge (351) von Pfadinformationen entspricht.

3. Verfahren nach einem der vorhergehenden Ansprüche, **dadurch gekennzeichnet, dass** im ersten Betriebsmodus des Telekommunikationsnetzes (100) die der ersten Teilmenge (351) zugeordnete Mehrzahl von möglichen Pfadinformationen (350) jeweils eine erste Teilpfadinformation und eine zweite Teilpfadinformation umfassen, wobei die erste Teilpfadinformation der der ersten Teilmenge (351) zugeordneten möglichen Pfadinformationen (350) jeweils identisch ist und wobei die zweite Teilpfadinformation der der ersten Teilmenge (351) zugeordneten möglichen Pfadinformationen (350) einen Informationsinhalt von 2 Bit oder von 3 Bit oder von 4 Bit oder von 5 Bit oder von 6 Bit, bevorzugt von 4 Bit, aufweist, wobei im ersten Betriebsmodus des Telekommunikationsnetzes (100) insbesondere lediglich die erste Teilpfadinformation der Mehrzahl von möglichen Teilpfadinformationen (350) ausgewertet wird.

4. Verfahren nach einem der vorhergehenden Ansprüche, **dadurch gekennzeichnet, dass** in einem dem ersten Schritt vorangehenden dritten Schritt und während das Telekommunikationsnetz (100) im zweiten Betriebsmodus betrieben wird, der erste Randnetzknoten (21, 31) eine Information erhält, wonach die im zweiten Betriebsmodus vorliegende erste Bandbreitenverfügbarkeit des ersten Übertragungspfades (301) im Vergleich zur im ersten Betriebsmodus vorliegenden ersten Bandbreitenverfügbarkeit des ersten Übertragungspfades (301) verringert ist und zumindest ein Teil der Mehrzahl von Pfadinformationen (350) anstelle der dem ersten Übertragungspfad (301) zugeordneten ersten Teilmenge (351) der dem zweiten Übertragungspfad (302) zugeordneten zweiten Teilmenge (352) zugeordnet wird.

5. Verfahren nach einem der vorhergehenden Ansprüche, **dadurch gekennzeichnet, dass** sich der erste Übertragungspfad (301) und der zweite Übertragungspfad (302) wenigstens in der Benutzung eines unterschiedlichen optischen Weges und/oder in der Benutzung von unterschiedlichen optischen Wellenlängen zwischen wenigstens zwei Netzknoten der Mehrzahl von Netzknoten (21 - 25, 31 - 36) unterscheiden.

6. Verfahren nach einem der vorhergehenden Ansprüche, **dadurch gekennzeichnet, dass** jede der Mehrzahl von möglichen Pfadinformationen (350) einer auf einem der Übertragungspfade (301, 302) im jeweiligen Betriebsmodus verfügbaren Teilbandbreite entspricht, wobei als Teilbandbreite insbesondere eine für jede der Mehrzahl von möglichen Pfadinformationen (350) feste Teilbandbreite von 1 GBd, 5 GBd, 10 GBd, 15 GBd, 20 GBd, 25 GBd, 30 GBd, 35 GBd, 40 GBd, 50 GBd, 60 GBd, 70 GBd, 80 GBd, 90 GBd oder 100 GBd entspricht.

7. Verfahren nach einem der vorhergehenden Ansprüche, **dadurch gekennzeichnet, dass** der erste Übertragungspfad (301) und/oder der zweite Übertragungspfad (302) entweder lediglich den ersten und zweiten Randnetzknoten (21, 31, 24, 34) sowie eine Datenübertragungsstrecke (1, 2, 3, 4, 5) zwischen beiden oder aber den ersten und zweiten Randnetzknoten (21, 31, 24, 34) sowie wenigstens einen weiteren Netzknoten der Mehrzahl von Netzknoten (21 - 25, 31 - 36) sowie eine Mehrzahl von Datenübertragungsstrecken (1, 2, 3, 4, 5) umfasst.

8. Telekommunikationsnetz (100) zur effizienteren Datenübertragung im Telekommunikationsnetz (100), insbesondere beruhend auf optischen Datenübertragungskomponenten zum Wellenlängen-Multiplex-Betrieb (WDM, wavelength division multiplex) einer Mehrzahl von verschiedenen optischen Wellenlängen, wobei das Telekommunikationsnetz (100) eine Mehrzahl von Netzknoten (21 - 25, 31 - 36) und zwischen den Netzknoten (21 - 25, 31 - 36) vorliegende Datenübertragungsstrecken (1, 2, 3, 4, 5) aufweist,
wobei eine Pfadinformation (310) zur Übertragung einer Gruppe von Nutzdatenpaketen (300) im Telekommunikationsnetz (100) entlang eines Übertragungspfades zwischen einem ersten Randnetzknoten (21, 31) und einem zweiten Randnetzknoten (24, 34) der Mehrzahl von Netzknoten (21 - 25, 31 - 36) verwendet wird,
wobei das Telekommunikationsnetz (100) zur Übertragung der Gruppe von Nutzdatenpaketen (300) vom ersten Randnetzknoten (21, 31) zum zweiten Randnetzknoten (24, 34) wenigstens einen ersten Übertragungspfad (301) und einen zweiten Übertragungspfad (302) aufweist,
wobei das Telekommunikationsnetz (100) derart konfiguriert ist, dass die der Gruppe von Nutzdatenpaketen (300) zugeordnete Pfadinformation (310) durch den ersten Randnetzknoten (21, 31) in Abhängigkeit des zweiten Randnetzknotens (24, 34) und in Abhängigkeit einer ersten Bandbreitenverfügbarkeit des ersten Übertragungspfades (301) und einer zweiten Bandbreitenverfügbarkeit des zweiten Übertragungspfades (302) im Telekommunikationsnetz (100) zwischen dem ersten Randnetzknoten (21, 31) und dem zweiten Randnetzknoten (24, 34) bestimmt wird, wobei das Telekommunikationsnetz (100) in einem ersten Betriebsmodus und in einem zweiten Betriebsmodus betreibbar ist, wobei sich wenigstens eine der ersten und zweiten Bandbreitenverfügbarkeit im zweiten Betriebsmodus von derjenigen im ersten Betriebsmodus unterscheidet,
wobei das Telekommunikationsnetz (100) ferner derart konfiguriert ist, dass:
-- im Telekommunikationsnetz (100) eine Mehrzahl von möglichen Pfadinformationen (350) für die Datenübertragung der Gruppe von Nutzdatenpaketen (300) vom ersten Randnetzknoten (21, 31) zum zweiten Randnetzknoten (24, 34) generiert oder aktualisiert wird, wobei die Mehrzahl von möglichen Pfadinformationen (350) eine dem ersten Übertragungspfad (301) zugeordnete erste Teilmenge (351) von Pfadinformationen und eine dem zweiten Übertragungspfad (302) zugeordnete und von der ersten Teilmenge (351) disjunkte zweite Teilmenge (352) von Pfadinformationen umfasst oder die Mehrzahl von möglichen Pfadinformationen (350) der dem ersten Übertragungspfad (301) zugeordneten ersten Teilmenge (351) von Pfadinformationen entspricht, wobei die Zuordnung der Mehrzahl von Pfadinformationen (350) zur ersten oder zur zweiten Teilmenge (351, 352) vom Betriebsmodus des Telekommunikationsnetzes (100) abhängig ist, und dass
-- die Pfadinformation (310) zur Übertragung der Gruppe von Nutzdatenpaketen (300) - aus der Mehrzahl von möglichen Pfadinformationen (350) - bestimmt wird, wobei die Pfadinformation (310) im ersten Betriebsmodus Element der dem ersten Übertragungspfad (301) zugeordneten ersten Teilmenge (351) der Mehrzahl von Pfadinformationen (350) und im zweiten Betriebsmodus Element der dem zweiten Übertragungspfad (302) zugeordneten zweiten Teilmenge (352) der Mehrzahl von Pfadinformationen (350) ist,
wobei die Mehrzahl von möglichen Pfadinformationen (350) - und damit auch die Pfadinformation (310) - eine Labelinformation eines MPLS, Multi Protocol Label Switched, Telekommunikationsnetzes sind.

9. Telekommunikationsnetz (100) nach Anspruch 8, **dadurch gekennzeichnet, dass** im ersten Betriebsmodus des Telekommunikationsnetzes (100) die dem zweiten Übertragungspfad (302) zugeordnete zweite Teilmenge (352) die leere Menge ist oder die Mehrzahl von möglichen Pfadinformationen (350) der dem ersten Übertragungspfad (301) zugeordneten ersten Teilmenge (351) von Pfadinformationen entspricht.

10. Telekommunikationsnetz (100) nach Anspruch 8 oder 9, **dadurch gekennzeichnet, dass** im ersten Betriebsmodus des Telekommunikationsnetzes (100) die der ersten Teilmenge (351) zugeordnete Mehrzahl von möglichen Pfadinformationen (350) jeweils eine erste Teilpfadinformation und eine zweite Teilpfadinformation umfassen, wobei die erste Teilpfadinformation der der ersten Teilmenge (351) zugeordneten möglichen Pfadinformationen (350) jeweils identisch ist und wobei die zweite Teilpfadinformation der der ersten Teilmenge (351) zugeordneten möglichen Pfadinformationen (350) einen Informationsinhalt von 2 Bit oder von 3 Bit oder von 4 Bit oder von 5 Bit oder von 6 Bit, bevorzugt von 4 Bit, aufweist, wobei im ersten Betriebsmodus des Telekommunikationsnetzes (100) insbesondere lediglich die erste Teilpfadinformation der Mehrzahl von möglichen Teilpfadinformationen (350) ausgewertet wird.

11. Computerprogramm mit Programmcodemitteln, mit deren Hilfe alle Schritte eines Verfahrens nach einem der Ansprüche 1 bis 7 durchführbar sind, wenn das Computerprogramm auf einer programmierbaren Einrichtung und/oder einem Netzknoten (21 - 25, 31 - 36) eines Telekommunikationsnetzes (100) ausgeführt wird.

12. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 7 durchführbar sind, wenn das Computerprogramm auf einer programmierbaren Einrichtung und/oder einem Netzknoten (21 - 25, 31 - 36) eines Telekommunikationsnetzes (100) ausgeführt wird.

## Claims

1. Method for more efficient data transmission in a telecommunications network (100), in particular based on optical data transmission components for wavelength division multiplex, WDM, operation of a plurality of different optical wavelengths, the telecommunications network (100) having a plurality of network nodes (21-25, 31-36) and data transmission routes (1, 2, 3, 4, 5) between the network nodes (21-25, 31-36),
wherein a piece of path information (310) is used for transmitting a group of payload data packets (300) in the telecommunications network (100) along a transmission path between a first network boundary node (21, 31) and a second network boundary node (24, 34) of the plurality of network nodes (21-25, 31-36),
wherein the telecommunications network (100) has at least a first transmission path (301) and a second transmission path (302) for transmitting the group of payload packets (300) from the first network boundary node (21, 31) to the second network boundary node (24, 34),
wherein the piece of path information (310) assigned to the group of payload data packets (300) is determined by the first network boundary node (21, 31) as a function of the second network boundary node (24, 34) and as a function of a first bandwidth availability of the first transmission path (301) and a second bandwidth availability of the second transmission path (302) in the telecommunications network (100) between the first network boundary node (21, 31) and the second network boundary node (24, 34),
wherein the telecommunications network (100) is operable in a first operating mode and in a second operating mode, at least one of the first and the second bandwidth availability in the second operating mode differing from that in the first operating mode,
wherein the method has the following steps:
- in a first step, in the telecommunications network (100), a plurality of possible pieces of path information (350) for the data transmission of the group of payload data packets (300) from the first network boundary node (21, 31) to the second network boundary node (24, 34) are generated or updated, the plurality of possible pieces of path information (350) comprising a first subset (351) of pieces of path information, which is assigned to the first transmission path (301), and a second subset (352) of pieces of path information, which is assigned to the second transmission path (302) and is disjoint from the first subset (351), or the plurality of possible pieces of path information (350) corresponds to the first subset (351) assigned to the first transmission path (301), the assignment of the plurality of pieces of path information (350) to the first or to the second subset (351, 352) being dependent on the operating mode of the telecommunication network (100),
- in a second step following the first step, the piece of path information (310) for transmitting the group of payload data packets (300) is determined among the plurality of possible pieces of path information (350), the piece of path information (310) being, in the first operating mode, an element of the first subset (351) of the plurality of path information (350), which is assigned to the first transmission path (301), and, in the second operating mode, an element of the second subset (352) of the plurality of path information (350), which is assigned to the second transmission path (302),
wherein the plurality of possible pieces of path information (350) - and thus also the piece of path information (310) - are label information of a multiprotocol label switching, MPLS, telecommunications network.

2. Method according to claim 1, **characterised in that**, in the first operating mode of the telecommunications network (100), the second subset (352) assigned to the second transmission path (302) is the empty set, or the plurality of possible pieces of path information (350) corresponds to the first subset (351) of pieces of path information, which is assigned to the first transmission path (301).

3. Method according to either of the preceding claims, **characterised in that**, in the first operating mode of the telecommunications network (100), the plurality of possible pieces of path information (350) assigned to the first subset (351) each comprise a first sub-piece of path information and a second sub-piece of path information, the first sub-piece of path information of the possible pieces of path information (350) assigned to the first subset (351) being identical in each case, and the second sub-piece of path information of the possible pieces of path information (350) assigned to the first subset (351) having an information content of 2 bits or 3 bits or 4 bits or 5 bits or 6 bits, preferably 4 bits, in particular merely the first sub-piece of path information of the plurality of possible sub-pieces of path information (350) being evaluated in the first operating mode of the telecommunications network (100).

4. Method according to any of the preceding claims, **characterised in that**, in a third step preceding the first step and while the telecommunications network (100) is being operated in the second operating mode, the first network boundary node (21, 31) receives a piece of information, whereby the first bandwidth availability of the first transmission path (301) in the second operating mode is reduced by comparison with the first bandwidth availability of the first transmission path (301) in the first operating mode and at least some of the plurality of pieces of path information (350) are assigned to the second subset (352) assigned to the second transmission path (302) instead of the first subset (351) assigned to the first transmission path (301).

5. Method according to any of the preceding claims, **characterised in that** the first transmission path (301) and the second transmission path (302) differ at least in the use of a different optical pathway and/or in the use of different optical wavelengths between at least two network nodes of the plurality of network nodes (21-25, 31-36).

6. Method according to any of the preceding claims, **characterised in that** each of the plurality of possible pieces of path information (350) corresponds to a sub-bandwidth available on one of the transmission paths (301, 302) in the associated operating mode, in particular a sub-bandwidth, which is fixed for each of the plurality of possible pieces of path information (350), of 1 GBd, 5 GBd, 10 GBd, 15 GBd, 20 GBd, 25 GBd, 30 GBd, 35 GBd, 40 GBd, 50 GBd, 60 GBd, 70 GBd, 80 GBd, 90 GBd or 100 GBd, serving as a sub-bandwidth.

7. Method according to any of the preceding claims, **characterised in that** the first transmission path (301) and/or the second transmission path (302) either comprise merely the first and the second network boundary node (21, 31, 24, 34) and a data transmission route (1, 2, 3, 4, 5) between the two or else comprise the first and the second network boundary node (21, 31, 24, 34) and at least one further network node of the plurality of network nodes (21-25, 31-36) and a plurality of data transmission routes (1, 2, 3, 4, 5).

8. Telecommunications network (100) for more efficient data transmission in a telecommunications network (100), in particular based on optical data transmission components for wavelength division multiplex, WDM, operation of a plurality of different optical wavelengths, the telecommunications network (100) having a plurality of network nodes (21-25, 31-36) and data transmission routes (1, 2, 3, 4, 5) between the network nodes (21-25, 31-36), wherein a piece of path information (310) is used for transmitting a group of payload data packets (300) in the telecommunications network (100) along a transmission path between a first network boundary node (21, 31) and a second network boundary node (24, 34) of the plurality of network nodes (21-25, 31-36),
wherein the telecommunications network (100) has at least a first transmission path (301) and a second transmission path (302) for transmitting the group of payload packets (300) from the first network boundary node (21, 31) to the second network boundary node (24, 34),
wherein the telecommunications network (100) is configured in such a way that the piece of path information (310) assigned to the group of payload data packets (300) is determined by the first network boundary node (21, 31) as a function of the second network boundary node (24, 34) and as a function of a first bandwidth availability of the first transmission path (301) and a second bandwidth availability of the second transmission path (302) in the telecommunications network (100) between the first network boundary node (21, 31) and the second network boundary node (24, 34),
wherein the telecommunications network (100) is operable in a first operating mode and in a second operating mode, at least one of the first and the second bandwidth availability in the second operating mode differing from that in the first operating mode,
wherein the the telecommunications network (100) is further configured in such a way that:
- in the telecommunications network (100), a plurality of possible pieces of path information (350) for the data transmission of the group of payload data packets (300) from the first network boundary node (21, 31) to the second network boundary node (24, 34) are generated or updated, the plurality of possible pieces of path information (350) comprising a first subset (351) of pieces of path information, which is assigned to the first transmission path (301), and a second subset (352) of pieces of path information, which is assigned to the second transmission path (302) and is disjoint from the first subset (351), or the plurality of possible pieces of path information (350) corresponds to the first subset (351) assigned to the first transmission path (301), the assignment of the plurality of pieces of path information (350) to the first or to the second subset (351, 352) being dependent on the operating mode of the telecommunication network (100), and in such a way that
- the piece of path information (310) for transmitting the group of payload data packets (300) is determined among the plurality of possible pieces of path information (350), the piece of path information (310) being, in the first operating mode, an element of the first subset (351) of the plurality of path information (350), which is assigned to the first transmission path (301), and, in the second operating mode, an element of the second subset (352) of the plurality of path information (350), which is assigned to the second transmission path (302),
wherein the plurality of possible pieces of path information (350) - and thus also the piece of path information (310) - are label information of a multiprotocol label switching, MPLS, telecommunications network.

9. Telecommunications network (100) according to claim 8, **characterised in that**, in the first operating mode of the telecommunications network (100), the second subset (352) assigned to the second transmission path (302) is the empty set, or the plurality of possible pieces of path information (350) corresponds to the first subset (351) of pieces of path information, which is assigned to the first transmission path (301).

10. Telecommunications network (100) according to either claim 8 or claim 9, **characterised in that**, in the first operating mode of the telecommunications network (100), the plurality of possible pieces of path information (350) assigned to the first subset (351) each comprise a first sub-piece of path information and a second sub-piece of path information, the first sub-piece of path information of the possible pieces of path information (350) assigned to the first subset (351) being identical in each case, and the second sub-piece of path information of the possible pieces of path information (350) assigned to the first subset (351) having an information content of 2 bits or 3 bits or 4 bits or 5 bits or 6 bits, preferably 4 bits, in particular merely the first sub-piece of path information of the plurality of possible sub-pieces of path information (350) being evaluated in the first operating mode of the telecommunications network (100).

11. Computer program comprising program code resources by means of which all steps of a method according to any of claims 1 to 7 can be carried out when the computer program is run on a programmable device and/or on a network node (21-25, 31-36) of a telecommunications network (100).

12. Computer program product comprising a computer-readable medium and a computer program stored on the computer-readable medium and comprising program code resources such that all steps of a method according to any of claims 1 to 7 can be carried out when the computer program is run on a programmable device and/or on a network node (21-25, 31-36) of a telecommunications network (100).

## Revendications

1. Procédé pour une transmission de données plus efficace dans un réseau de télécommunications (100), basé en particulier sur des composants de transmission de données optiques pour le fonctionnement en multiplexage par répartition en longueur d'onde (WDM, wavelength division multiplex) d'une pluralité de longueurs d'onde optiques différentes, le réseau de télécommunications (100) présentant une pluralité de noeuds de réseau (21 -25, 31 - 36) et des liaisons de transmission de données (1, 2, 3, 4, 5) entre les noeuds de réseau (21 - 25, 31 - 36),
dans lequel une information de chemin (310) est utilisée pour la transmission d'un groupe de paquets de données utiles (300) dans le réseau de télécommunications (100) le long d'un chemin de transmission entre un premier noeud de réseau périphérique (21, 31) et un deuxième noeud de réseau périphérique (24, 34) de la pluralité de noeuds de réseau (21 - 25, 31 - 36),
dans lequel le réseau de télécommunications (100) présente au moins un premier chemin de transmission (301) et un deuxième chemin de transmission (302) pour la transmission du groupe de paquets de données utiles (300) du premier noeud de réseau périphérique (21, 31) au deuxième noeud de réseau périphérique (24, 34),
dans lequel l'information de chemin (310) associée au groupe de paquets de données utiles (300) est déterminée par le premier noeud de réseau périphérique (21, 31) en fonction du deuxième noeud de réseau périphérique (24, 34) et en fonction d'une première disponibilité de bande passante du premier chemin de transmission (301) et d'une deuxième disponibilité de bande passante du deuxième chemin de transmission (302) dans le réseau de télécommunications (100) entre le premier noeud de réseau périphérique (21, 31) et le deuxième noeud de réseau périphérique (24, 34),
dans lequel le réseau de télécommunications (100) peut fonctionner dans un premier mode de fonctionnement et dans un deuxième mode de fonctionnement, au moins l'une des première et deuxième disponibilités de bande passante dans le deuxième mode de fonctionnement étant différente de celle dans le premier mode de fonctionnement,
le procédé comprenant les étapes suivantes :
- dans une première étape, une pluralité d'informations de chemin possibles (350) est générée ou mise à jour dans le réseau de télécommunications (100) pour la transmission de données du groupe de paquets de données utiles (300) du premier noeud de réseau périphérique (21, 31) au deuxième noeud de réseau périphérique (24, 34), la pluralité d'informations de chemin possibles (350) comprenant un premier sous-ensemble (351) d'informations de chemin associé au premier chemin de transmission (301) et un deuxième sous-ensemble (352) d'informations de chemin associé au deuxième chemin de transmission (302) et disjoint du premier sous-ensemble (351) ou la pluralité d'informations de chemin possibles (350) correspondant au premier sous-ensemble (351) d'informations de chemin associé au premier chemin de transmission (301), l'association de la pluralité d'informations de chemin (350) au premier ou au deuxième sous-ensemble (351, 352) dépendant du mode de fonctionnement du réseau de télécommunications (100),
- dans une deuxième étape suivant la première étape, l'information de chemin (310) pour la transmission du groupe de paquets de données utiles (300) - parmi la pluralité d'informations de chemin possibles (350) - est déterminée, l'information de chemin (310) étant, dans le premier mode de fonctionnement, un élément du premier sous-ensemble (351) de la pluralité d'informations de chemin (350) associé au premier chemin de transmission (301) et, dans le deuxième mode de fonctionnement, un élément du deuxième sous-ensemble (352) de la pluralité d'informations de chemin (350) associé au deuxième chemin de transmission (302),
dans lequel la pluralité d'informations de chemin possibles (350) - et donc également l'information de chemin (310) - est une information d'étiquette d'un réseau de télécommunications MPLS, Multi Protocol Label Switched.

2. Procédé selon la revendication 1, **caractérisé en ce que**, dans le premier mode de fonctionnement du réseau de télécommunications (100), le deuxième sous-ensemble (352) associé au deuxième chemin de transmission (302) est l'ensemble vide ou la pluralité d'informations de chemin possibles (350) correspond au premier sous-ensemble (351) d'informations de chemin associé au premier chemin de transmission (301).

3. Procédé selon l'une des revendications précédentes, **caractérisé en ce que**, dans le premier mode de fonctionnement du réseau de télécommunications (100), la pluralité d'informations de chemin possibles (350) associées au premier sous-ensemble (351) comprend chaque fois une première information de chemin partiel et une deuxième information de chemin partiel, la première information de chemin partiel des informations de chemin possibles (350) associées au premier sous-ensemble (351) étant chaque fois identique et la deuxième information de chemin partiel des informations de chemin possibles (350) associées au premier sous-ensemble (351) présentant un contenu d'information de 2 bits ou de 3 bits ou de 4 bits ou de 5 bits ou de 6 bits, de préférence de 4 bits, seule la première information de chemin partiel de la pluralité d'informations de chemin partiel possibles (350) étant en particulier évaluée dans le premier mode de fonctionnement du réseau de télécommunications (100).

4. Procédé selon l'une des revendications précédentes, **caractérisé en ce que**, dans une troisième étape précédant la première étape et pendant que le réseau de télécommunications (100) fonctionne dans le deuxième mode de fonctionnement, le premier noeud de réseau périphérique (21, 31) reçoit une information selon laquelle la première disponibilité de bande passante du premier chemin de transmission (301) présente dans le deuxième mode de fonctionnement est réduite par rapport à la première disponibilité de bande passante du premier chemin de transmission (301) présente dans le premier mode de fonctionnement et au moins une partie de la pluralité d'informations de chemin (350) est associée au deuxième sous-ensemble (352) associé au deuxième chemin de transmission (302) au lieu du premier sous-ensemble (351) associé au premier chemin de transmission (301).

5. Procédé selon l'une des revendications précédentes, **caractérisé en ce que** le premier chemin de transmission (301) et le deuxième chemin de transmission (302) diffèrent au moins dans l'utilisation d'un chemin optique différent et/ou dans l'utilisation de longueurs d'onde optiques différentes entre au moins deux noeuds de la pluralité de noeuds de réseau (21 - 25, 31 - 36).

6. Procédé selon l'une des revendications précédentes, **caractérisé en ce que** chacune de la pluralité d'informations de chemin possibles (350) correspond à une largeur de bande partielle disponible sur l'un des chemins de transmission (301, 302) dans le mode de fonctionnement respectif, la largeur de bande partielle correspondant en particulier à une largeur de bande partielle fixe pour chacune de la pluralité d'informations de chemin possibles (350) de 1 GBd, 5 GBd, 10 GBd, 15 GBd, 20 GBd, 25 GBd, 30 GBd, 35 GBd, 40 GBd, 50 GBd, 60 GBd, 70 GBd, 80 GBd, 90 GBd ou 100 GBd.

7. Procédé selon l'une des revendications précédentes, **caractérisé en ce que** le premier chemin de transmission (301) et/ou le deuxième chemin de transmission (302) comprend soit uniquement les premier et deuxième noeuds de réseau périphériques (21, 31, 24, 34) ainsi qu'une liaison de transmission de données (1, 2, 3, 4, 5) entre les deux, soit les premier et deuxième noeuds de réseau périphériques (21, 31, 24, 34) ainsi qu'au moins un autre noeud de réseau de la pluralité de noeuds de réseau (21 - 25, 31 - 36) ainsi qu'une pluralité de liaisons de transmission de données (1, 2, 3, 4, 5).

8. Réseau de télécommunications (100) pour une transmission de données plus efficace dans le réseau de télécommunications (100), reposant en particulier sur des composants de transmission de données optiques pour le fonctionnement en multiplexage par répartition en longueur d'onde (WDM, wavelength division multiplex) d'une pluralité de longueurs d'onde optiques différentes, le réseau de télécommunications (100) présentant une pluralité de noeuds de réseau (21 - 25, 31 - 36) et des liaisons de transmission de données (1, 2, 3, 4, 5) entre les noeuds de réseau (21 - 25, 31 - 36),
dans lequel une information de chemin (310) est utilisée pour la transmission d'un groupe de paquets de données utiles (300) dans le réseau de télécommunications (100) le long d'un chemin de transmission entre un premier noeud de réseau périphérique (21, 31) et un deuxième noeud de réseau périphérique (24, 34) de la pluralité de noeuds de réseau (21 - 25, 31 - 36),
dans lequel le réseau de télécommunications (100) présente au moins un premier chemin de transmission (301) et un deuxième chemin de transmission (302) pour la transmission du groupe de paquets de données utiles (300) du premier noeud de réseau périphérique (21, 31) au deuxième noeud de réseau périphérique (24, 34),
dans lequel le réseau de télécommunications (100) est configuré de telle sorte que l'information de chemin (310) associée au groupe de paquets de données utiles (300) est déterminée par le premier noeud de réseau périphérique (21, 31) en fonction du deuxième noeud de réseau périphérique (24, 34) et en fonction d'une première disponibilité de bande passante du premier chemin de transmission (301) et d'une deuxième disponibilité de bande passante du deuxième chemin de transmission (302) dans le réseau de télécommunications (100) entre le premier noeud de réseau périphérique (21, 31) et le deuxième noeud de réseau périphérique (24, 34),
dans lequel le réseau de télécommunications (100) peut fonctionner dans un premier mode de fonctionnement et dans un deuxième mode de fonctionnement, au moins l'une des première et deuxième disponibilités de bande passante dans le deuxième mode de fonctionnement étant différente de celle dans le premier mode de fonctionnement,
le réseau de télécommunications (100) étant en outre configuré de telle sorte que :
- une pluralité d'informations de chemin possibles (350) est générée ou mise à jour dans le réseau de télécommunications (100) pour la transmission de données du groupe de paquets de données utiles (300) du premier noeud de réseau périphérique (21, 31) au deuxième noeud de réseau périphérique (24, 34), la pluralité d'informations de chemin possibles (350) comprenant un premier sous-ensemble (351) d'informations de chemin associé au premier chemin de transmission (301) et un deuxième sous-ensemble (352) d'informations de chemin associé au deuxième chemin de transmission (302) et disjoint du premier sous-ensemble (351) ou la pluralité d'informations de chemin possibles (350) correspondant au premier sous-ensemble (351) d'informations de chemin associé au premier chemin de transmission (301), l'association de la pluralité d'informations de chemin (350) au premier ou au deuxième sous-ensemble (351, 352) dépendant du mode de fonctionnement du réseau de télécommunications (100), et en ce que
-- l'information de chemin (310) pour la transmission du groupe de paquets de données utiles (300) - parmi la pluralité d'informations de chemin possibles (350) - est déterminée, l'information de chemin (310) étant, dans le premier mode de fonctionnement, un élément du premier sous-ensemble (351) de la pluralité d'informations de chemin (350) associé au premier chemin de transmission (301) et, dans le deuxième mode de fonctionnement, un élément du deuxième sous-ensemble (352) de la pluralité d'informations de chemin (350) associé au deuxième chemin de transmission (302),
dans lequel la pluralité d'informations de chemin possibles (350) - et donc également l'information de chemin (310) - est une information d'étiquette d'un réseau de télécommunications MPLS, Multi Protocol Label Switched.

9. Réseau de télécommunications (100) selon la revendication 8, **caractérisé en ce que**, dans le premier mode de fonctionnement du réseau de télécommunications (100), le deuxième sous-ensemble (352) associé au deuxième chemin de transmission (302) est l'ensemble vide ou la pluralité d'informations de chemin possibles (350) correspond au premier sous-ensemble (351) d'informations de chemin associé au premier chemin de transmission (301).

10. Réseau de télécommunications (100) selon la revendication 8 ou 9, **caractérisé en ce que** dans le premier mode de fonctionnement du réseau de télécommunications (100), la pluralité d'informations de chemin possibles (350) associées au premier sous-ensemble (351) comprend chaque fois une première information de chemin partiel et une deuxième information de chemin partiel, la première information de chemin partiel des informations de chemin possibles (350) associées au premier sous-ensemble (351) étant chaque fois identique et la deuxième information de chemin partiel des informations de chemin possibles (350) associées au premier sous-ensemble (351) présentant un contenu d'information de 2 bits ou de 3 bits ou de 4 bits ou de 5 bits ou de 6 bits, de préférence de 4 bits, seule la première information de chemin partiel de la pluralité d'informations de chemin partiel possibles (350) étant en particulier évaluée dans le premier mode de fonctionnement du réseau de télécommunications (100).

11. Programme d'ordinateur comprenant des moyens de code de programme à l'aide desquels toutes les étapes d'un procédé selon l'une des revendications 1 à 7 peuvent être mises en œuvre lorsque le programme d'ordinateur est exécuté sur un dispositif programmable et/ou un noeud de réseau (21 - 25, 31 - 36) d'un réseau de télécommunications (100).

12. Produit programme d'ordinateur comprenant un support lisible par ordinateur et un programme d'ordinateur stocké sur le support lisible par ordinateur comprenant des moyens de code de programme adaptés à ce que toutes les étapes d'un procédé selon l'une des revendications 1 à 7 puissent être mises en œuvre lorsque le programme d'ordinateur est exécuté sur un dispositif programmable et/ou un noeud de réseau (21 - 25, 31 - 36) d'un réseau de télécommunications (100) .
